(19) Europäisches Patentamt
European Patent Office
Office européen des brevets

(11) EP 3 322 103 A1

(12) # EUROPEAN PATENT APPLICATION

(43) Date of publication:
**16.05.2018 Bulletin 2018/20**

(21) Application number: **16306479.3**

(22) Date of filing: **10.11.2016**

(51) Int Cl.:
***H04B 7/0452*** *(2017.01)* ***H04L 25/02*** *(2006.01)*
***H04B 7/0417*** *(2017.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Alcatel Lucent**
**91620 Nozay (FR)**

(72) Inventor: **Wesemann, Stefan**
**70435 Stuttgart (DE)**

(74) Representative: **2SPL Patentanwälte PartG mbB**
**Postfach 15 17 23**
**80050 München (DE)**

Remarks:
Amended claims in accordance with Rule 137(2) EPC.

(54) **APPARATUS AND METHOD FOR A BASE STATION OF A WIRELESS COMMUNICATION SYSTEM**

(57) The present disclosure relates to an apparatus (200) for a base station (110) of a wireless communication system (100), the base station comprising a plurality of base station antennas (112) and configured to communicate with a plurality of user terminals (120), the apparatus comprising downlink channel covariance matrix processing circuitry (210) configured to generate a plurality of downlink channel covariance matrices (214), wherein a respective downlink channel covariance matrix is related to a respective downlink channel between the plurality of base station antennas and a respective user terminal; and output signal generation circuitry (220) configured to generate an output signal (222) for the plurality of user terminals based on a combination of the plurality of downlink channel covariance matrices.

FIG. 2

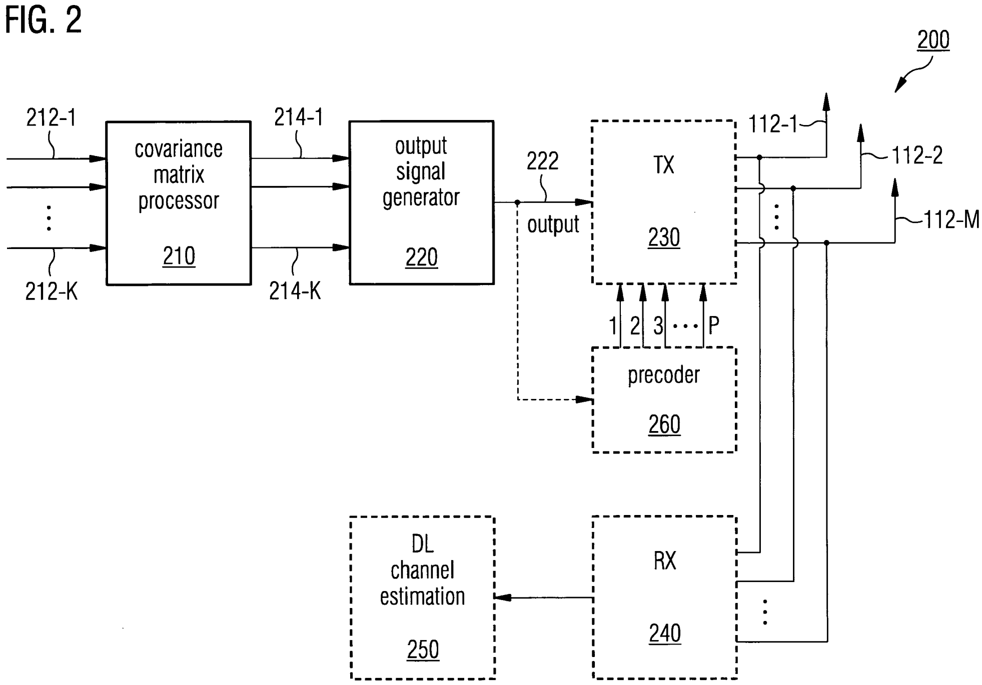


EP 3 322 103 A1

**Description**

The present disclosure generally relates to wireless communication systems and, more particularly, to methods and apparatuses for base stations of wireless communication systems, wherein the base station comprises a plurality of base station antennas and is configured to communicate with a plurality of user terminals.

Background

Massive Multiple-Input Multiple-Output (MIMO) commonly refers to a multi-user MIMO technology where a base station (BS) is equipped with an array of *M* active antenna elements to communicate with a plurality of *K* user terminals over the same time and frequency band. Note that user terminals are sometimes also referred to as User Equipment (UE) and base station are sometimes referred to NodeB or eNodeB according to 3rd Generation Partnership Project (3GPP) nomenclature. Massive MIMO can make use of a very large number of service antennas (e.g., tens, hundreds or even thousands) that may be operated fully coherently and adaptively. The large number of antennas helps to focus transmission and reception of signal energy into ever-smaller regions of space.

The user terminals may employ a single or multiple antennas, respectively. Optimal benefits of massive MIMO systems can be achieved when the base station has accurate Channel State Information (CSI), which, for example, can be used for the design of the (spatial) precoder for the downlink (DL) transmission, and the (spatial) equalizer for the uplink (UL) reception. While Time Division Duplex (TDD) systems can leverage channel reciprocity in order to obtain the CSI via UL training (whose overhead scales only with the number of terminals *K*), Frequency Division Duplex (FDD) systems require a dedicated DL training and feedback in the UL, whose overhead generally scales with the number of BS antennas *M*. The extra FDD overhead might be of little importance for large channel coherence times, but it is a critical limitation for high mobility scenarios.

Thus, there is a desire for improved downlink processing.

Summary

According to a first aspect of the present disclosure, it is provided an apparatus for a base station of a wireless communication system, the base station comprising a plurality of base station antennas and configured to communicate with a plurality of user terminals. The apparatus comprises downlink channel covariance matrix processing circuitry configured to generate a plurality of downlink channel covariance matrices. A respective downlink channel covariance matrix is related to a respective downlink channel between the plurality of base station antennas and a respective user terminal. The apparatus further comprises output signal generation circuitry configured to generate an output signal for the plurality of user terminals based on a combination of the plurality of downlink channel covariance matrices.

According to a further aspect of the present disclosure, it is provided a method for a base station of a wireless communication system, the base station comprising a plurality of base station antennas and configured to communicate with a plurality of user terminals. The method includes generating a plurality of downlink channel covariance matrices, wherein a respective downlink channel covariance matrix is related to a respective downlink channel between the plurality of base station antennas and a respective user terminal. The method further includes generating an output signal for the plurality of user terminals based on a combination of the plurality of downlink channel covariance matrices.

Thus, for varying downlink channel covariance matrices the output signal may vary accordingly. Different kinds of output signals can be generated, including joint pilot signals or precoding matrices.

Brief description of the Figures

Some embodiments of apparatuses and/or methods will be described in the following by way of example only, and with reference to the accompanying figures, in which

FIG. 1 shows an overview of a wireless communication system including at least one base station and a plurality of user terminals;

FIG. 2 shows a block diagram of an apparatus that can be used for or in the base station of FIG. 1;

FIG. 3 illustrates a flowchart of a method for a base station of a wireless communication system according to an example;

FIG. 4 shows a block diagram of a precoder circuit according to an example;

FIG. 5 illustrates an overview on a base station with multi-antenna processing according to an example;

FIG. 6 illustrates an example of a proposed FDD Frame Structure;

FIG. 7 illustrates a simulated (average) mean square channel estimation error as a function of the pilot signal length, for M=100 BS antennas and a DL SNR of 20dB; and

FIG. 8 illustrates a simulated downlink spectral efficiency as a function of the number of terminals, for the Discrete Fourier Transform (DFT)-based Grid of Beams (GoB) (left) and a proposed adaptive GoB (right), using the estimated downlink CSI for zero-forcing precoding of data streams.

Description of Examples

Various examples will now be described more fully with reference to the accompanying drawings in which some examples are illustrated. In the figures, the thicknesses of lines, layers and/or regions may be exaggerated for clarity.

Accordingly, while examples are capable of various modifications and alternative forms, examples thereof are shown by way of example in the figures and will herein be described in detail. It should be understood, however, that there is no intent to limit examples to the particular forms disclosed, but on the contrary, examples are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

**FIG. 1** shows an overview of a wireless communication system 100 including at least one base station 110 and a plurality of *K* user terminals 120-1 to 120-*K* associated with the base station 110. The base station 110 is equipped with a plurality of *M* antennas 112-1 to 112-*M*, which can be used for transmission as well as for reception. In some scenarios, in order that the MIMO system 100 is able to operate satisfactorily, the correlation between the antennas 112-1 to 112-*M* can be chosen small. As a rule of thumb, a spacing of at least $\lambda/2$ (where $\lambda$ is the wavelength of the signal) between adjacent antennas of the same polarization can be considered good enough to provide almost no correlation between the antennas. In case of so-called massive MIMO systems, *M* can be in the order of tens, hundreds or even thousands. Also, the terminals 120 can be equipped with a plurality of antennas. In the following, we will assume that each terminal is only equipped with a single antenna. However, the skilled person having benefit from the present disclosure will appreciate that the application of the proposed concepts to terminals with multiple antennas is straight forward.

The present disclosure presents example implementations of solutions particularly but not exclusively suited for present and future massive MIMO FDD systems for mobile communications. Massive MIMO can make use of a very large number of service antennas (e.g., hundreds or thousands) that can be operated fully coherently and adaptively and is a key candidate to address the challenges of present and future mobile communication standards, especially to provide higher capacity in dense urban scenarios.

Examples of present mobile communication standards to which examples of the present disclosure may be applied to are the Third Generation Partnership Project (3GPP)-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station can be operable to communicate with one or more active mobile devices and a base station can be located in or adjacent to a coverage area of another base station, e.g. a macro cell base station or small cell base station. A base station can be located in the fixed or stationary part of the network or system. A base station may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

Hence, embodiments may provide a mobile communication system comprising one or more mobile user devices and one or more base station, wherein the base stations may establish macro cells or small cells, as e.g. pico-, metro-, or femto cells. A mobile user device may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A mobile user devices can be associated, camped on, or registered with a base station or cell. The term cell refers to a coverage area of radio services provided by a base station, e.g. a NodeB (NB), an eNodeB (eNB), a remote radio head, a transmission point, etc. A base station may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station may, for example, operate three or six cells covering sectors of 120° (in case of three cells), 60° (in case of six cells) respectively. A base station may operate multiple sectorized antennas. In the following a cell may represent a corresponding base station generating the cell or, likewise, a base station may represent a cell the base station generates.

Turning now to **FIG. 2,** it is shown a block diagram of an apparatus 200 which can be used for or in the base station 110 of FIG. 1.

The apparatus 200 comprises downlink channel covariance matrix processing circuitry 210 configured to generate a plurality of $K$ downlink channel covariance matrices 214-1 to 214-$K$ based on some input 212-1 to 212-$K$. For example, the input can be downlink receive signals fed back to the base station 110 by the user terminal 120. For another example, the inputs 212-1 to 212-$K$ can be a plurality of $K$ uplink channel covariance matrices. A respective downlink channel covariance matrix 214-$k$ ($k$ = 1 ... $K$) is related to a respective downlink channel between the plurality of $M$ base station antennas and the $k$-th user terminal. Likewise, a respective uplink channel covariance matrix 212-$k$ ($k$ = 1 ... $K$) is related to a respective uplink channel between the $k$-th user terminal and the plurality of $M$ base station antennas. The skilled person having benefit from the present disclosure will appreciate that "downlink" refers to the link from the base station 110 to a user terminal 120, while "uplink" refers to the link from a user terminal 120 to the base station 110. Also, the skilled person having benefit from the present disclosure will appreciate that a covariance matrix is a matrix whose element in the $i, j$ position is the covariance between the $i$-th and $j$-th elements of a random vector, which can be an uplink or downlink receive signal vector according to the present disclosure.

Apparatus 200 further comprises output signal generation circuitry 220 configured to generate an output signal 222 for the plurality of user terminals based on a combination of the plurality of downlink channel covariance matrices 214-$k$ ($k$ = 1 ... $K$). As will become apparent in the sequel of the present disclosure, various combinations of the plurality of downlink channel covariance matrices are possible. Also, different kinds of output signals are possible.

The skilled person having benefit from the present disclosure will appreciate that downlink channel covariance matrix processing circuitry 210 and/or output signal generation circuitry 220 can be implemented by dedicated hardware components or combinations thereof, such as Digital Signal Processors (DSPs), Field Programmable Gate Arrays (FPGAs) or Application Specific Integrated Circuits (ASICs), for example. The signal processing may take place in the digital baseband domain, for example.

In some examples, apparatus 200 can further optionally comprise transmitter circuitry 230 which is configured to transmit the output signal 222 to the plurality of $K$ user terminals via the plurality of $M$ base station antennas 112-1 to 112-$M$. The skilled person having benefit from the present disclosure will appreciate that transmitter circuitry 230 can comprise digital and/or analog transmitter frontend and backend hardware components, such as digital and/or analog filters (e.g., bandpass filters), mixers for frequency conversion, Power Amplifiers (PAs), matching networks, and the like.

In some examples, the output signal generation circuitry 220 can be configured to generate a joint downlink pilot signal common to the plurality of user terminals 120-1 to 120-*K* based on the combination of the plurality of downlink channel covariance matrices 214-1 to 214-K. In such embodiments, the output signal 222 is thus the joint downlink pilot signal. The skilled person having benefit from the present disclosure will appreciate that the joint downlink pilot signal may be adaptive to the plurality of downlink channel covariance matrices. In other words, a variation of one or more downlink channel covariance matrices leads to a variation of the joint downlink pilot signal.

In some examples, the downlink channel covariance matrix processing circuitry 210 can be configured to generate a downlink channel covariance matrix based on uplink channel state information related to an uplink channel between a respective user terminal 120 and the plurality of base station antennas 112-1 to 112-*M*.

In some examples, the downlink channel covariance matrix processing circuitry 210 can be configured to normalize each downlink channel covariance matrix of the plurality of downlink channel covariance matrices. The skilled person having benefit from the present disclosure will appreciate that there are various possible normalizations. For example, the downlink channel covariance matrix processing circuitry can be configured to normalize a *k*-th downlink channel covariance matrix $\mathbf{R}_k$ in accordance with $\overline{\mathbf{R}}_k = \boldsymbol{M} \cdot \mathrm{tr}(\mathbf{R}_k)^{-1}\mathbf{R}_k, \forall k,$ wherein tr(.) denotes the matrix trace, *M* the number of base station antennas, and $\overline{\mathbf{R}}_k$ the normalized *k*-th downlink channel covariance matrix. The skilled person will appreciate that the trace of an *n*-by-*n* square matrix **A** is defined to be the sum of the elements on the main diagonal (the diagonal from the upper left to the lower right) of **A**.

In some examples, the downlink channel covariance matrix processing circuitry 210 can be configured to sum the plurality of (normalized) downlink channel covariance matrices to generate a combined downlink channel covariance matrix. For example, the downlink channel covariance matrix processing circuitry can be configured to sum the plurality of *K* (normalized) downlink channel covariance matrices in accordance with $\boldsymbol{R} = \sum_{k=1}^{K} \alpha_k \overline{\boldsymbol{R}}_k$ , wherein here $\alpha_k$ denotes a real-valued weighting or priority factor for the *k*-th user terminal and **R** the combined downlink channel covariance matrix.

In some examples, the output signal generation circuitry 220 can be configured to generate the joint downlink pilot signal based on an eigendecomposition of the combined downlink channel covariance matrix. For example, the output signal generation circuitry 220 can be configured to generate the joint downlink pilot signal based on $\tau_d$ eigenvectors corresponding to the $\tau_d$ largest eigenvalues of the combined downlink channel covariance matrix. Here, $\tau_d$ denotes a number of *M* x 1 pilot sequences, leading to a joint *M* x $\tau_d$ downlink pilot signal block $\mathbf{\Psi}_{\mathrm{d}}^{H}$ (where the superscript "H" denotes "conjugate transpose"). The output signal generation circuitry 220 can thus be configured to generate the joint downlink pilot signal $\mathbf{\Psi}_{\mathrm{d}}^{H}$ in accordance with $\mathbf{\Psi}_{\mathrm{d}}^{H} = \sqrt{\rho_{\mathrm{d}}}\mathbf{U}_{[1:\tau_{\mathrm{d}}]}$, wherein $\mathbf{R} = \mathbf{U}\Lambda\mathbf{U}^H$ denotes the combined downlink channel covariance matrix, U the eigenvectors, Λ its eigenvalues, and $\rho_d$ denotes a downlink Signal-to-Noise Ratio (SNR).

In another example, the output signal generation circuitry 220 can be configured to generate the joint downlink pilot signal $\mathbf{\Psi}_{\mathrm{d}}^{H}$ based on a concatenation of the first $\tau_{\mathrm{d}}^{K} = \mathrm{floor}(\tau_{\mathrm{d}} / K)$ columns of each downlink channel covariance matrix $\boldsymbol{R}_k$ and a subsequent orthonormalization of the concatenated columns, wherein $\tau_d$ denotes the number of pilot sequences.

In some examples, apparatus 200 can optionally further comprise receiver circuitry 240 configured to receive, from the plurality of user terminals 120-1 to 120-*K*, a retransmitted version of the joint downlink pilot signal. The retransmitted version of the joint downlink pilot signal comprises the joint downlink pilot signal received by the plurality of user terminals via respective downlink channels and retransmitted to the base station 110 by the plurality of user terminals via respective uplink channels.

In some examples, apparatus 200 can optionally further comprise downlink channel estimation circuitry 250 configured to estimate one or more downlink channels between the plurality of base station antennas 112-1 to 112-*M* and one or more respective user terminals 120-1 to 120-*K* based on the received retransmitted version of the joint downlink pilot signal, the joint downlink pilot signal, and an estimate of one or more uplink channels between one or more respective user terminals and the plurality of base station antennas.

For example, the downlink channel estimation circuitry 250 can be configured to estimate the one or more downlink channels based on the Zero Forcing (ZF) or the Minimum Mean Squared Error (MMSE) criterion.

In some examples, the output signal generation circuitry 220 can be configured to generate an $M \times P$ ($P < M$) precoding matrix for reducing a downlink channel dimension based on a combination of the plurality of the downlink channel covariance matrices 214-1 to 214-*K*. In such embodiments, the output signal 222 is thus a precoding matrix.

The apparatus 200 can then further comprise a channel precoder 260 configured to generate, using the precoding matrix, a plurality of $P < M$ output signals based on a plurality of $M$ input signals. The skilled person having benefit from the present disclosure will appreciate that the precoding matrix may be adaptive to the plurality of downlink channel covariance matrices. In other words, a variation of one or more downlink channel covariance matrices leads to a variation of the precoding matrix.

In some examples, the output signal generation circuitry 220 can be configured to generate the precoding matrix based on an eigendecomposition of a combined downlink channel covariance matrix.

In some examples, the output signal generation circuitry 220 can be configured to generate the precoding matrix based on $P$ eigenvectors corresponding to the $P$ largest eigenvalues of the combined downlink channel covariance matrix. For example, the output signal generation circuitry 220 can be configured to generate the precoding matrix $\boldsymbol{W}$ in accordance with $\boldsymbol{W} = \sqrt{\rho_{\mathrm{d}}}\boldsymbol{U}_{[1:\boldsymbol{P}]}$, wherein $\mathbf{R} = \mathbf{U}\Lambda\mathbf{U}^H$ denotes the combined downlink channel covariance matrix, $\mathbf{U}$ the eigenvectors, Λ its eigenvalues, and $\rho_{\mathrm{d}}$ denotes a downlink Signal-to-Noise Ratio (SNR).

The skilled person having benefit from the present disclosure will appreciate that apparatus 200 or base station 110 is configured to perform a corresponding method, a schematic flowchart of which is depicted in **FIG. 3.**

Method 300 is for a base station of a wireless communication system, wherein the base station comprises a plurality of base station antennas and is configured to communicate with a plurality of user terminals. The method 300 includes generating 310 a plurality of downlink channel covariance matrices, wherein a respective downlink channel covariance matrix is related to a respective downlink channel between the plurality of base station antennas and a respective user terminal. The method further includes generating 320 an output signal for the plurality of user terminals based on a combination of the plurality of downlink channel covariance matrices. As described before, the output signal can be a joint downlink pilot signal common to the plurality of users or a precoding matrix, for example.

Some examples of the present disclosure thus propose a (single-shot) downlink channel training method whose overhead can be flexibly scaled down in order to support short channel coherence times. As will be shown, the proposed method can significantly increase the spectral efficiency of the massive MIMO system 100 of FIG. 1, especially for small channel coherence times, and can support a large number $M$ of base station antennas.

Some examples propose designing a (short) downlink pilot block jointly for all terminals, based on the knowledge of the downlink channel covariance matrices. This can allow to significantly reduce the downlink training overhead by exploiting synergies (e.g., subspace overlaps between the individual covariance matrices) between the channel training for the individual terminals.

While a functional overview of the system 100 and the apparatus 200 for the base station 110 has been provided before, we will now highlight some further details of some examples of the present disclosure.

An example downlink channel training method according to the present disclosure relies on the knowledge of the downlink channel covariance matrices at the base station 110, which can be derived from uplink channel covariance matrices, for example.

In one example, the uplink channel covariance matrices can be estimated using uplink respective receive signals of the $M$ base station antennas. An $M$ x 1 receive signal vector $\boldsymbol{y}_u(n)$ may denote the antenna array output at time instant $n$ when a (possibly unknown) signal with fixed power has been transmitted by a certain user. Then, the UL covariance $\boldsymbol{R}_u$ corresponding to said user can be obtained by time averaging $N$ receive signal vectors or uplink channel responses, for example, according to

$$\boldsymbol{R}_u = \frac{1}{N}\sum_{n=1}^{N} \boldsymbol{y}_u(n)\boldsymbol{y}_u^H(n),$$

where the indices $n = 1,..., N$ denote the respective time instants at which the antenna array output has been captured.

In another example, uplink Channel State Information (CSI) and hence the uplink channel covariance matrices can be estimated as follows: The terminals 120-1 to 120-$K$ collectively transmit on the uplink channel orthogonal pilot sequences e.g. of sample duration $\tau_u \geq K$, represented by a $\tau_{\mathrm{u}} \times K$ unitary matrix, $\Psi_{\mathrm{u}}$. The base station antenna array receives an $M \times \tau_{\mathrm{u}}$ signal,

$$\mathbf{Y}_{\mathrm{u}} = \sqrt{\rho_{\mathrm{u}}\tau_{\mathrm{u}}}\,\mathbf{G}_{\mathrm{u}}\boldsymbol{\Psi}_{\mathrm{u}}^{\mathrm{H}} + \mathbf{V}_{\mathrm{u}},$$

where the superscript "H" denotes "conjugate transpose", the matrix $\mathbf{V}_{\mathrm{u}}$ is additive receiver noise, and $\rho_{\mathrm{u}}$ is the uplink

SNR. Each of the $M$ base station antennas 112-1 to 112-$M$ can correlate its received signal with each of the $K$ uplink pilot sequences as follows to obtain a noisy version of the uplink matrix-valued channel $\mathbf{G}_u$ :

$$\mathbf{Y}_u \mathbf{\Psi}_u = \sqrt{\rho_u \tau_u} \mathbf{G}_u + \mathbf{V}'_u$$

An appropriately scaled version of the latter expression constitutes the minimum mean-square (Bayes) estimate for the uplink channel. The skilled person having benefit from the present disclosure will appreciate that the uplink covariance matrix $\boldsymbol{R}_u$ can also be derived from the uplink matrix-valued channel $\mathbf{G}_u$.

In the following, we briefly describe two examples for the estimation of the downlink channel covariance matrix for a single user. We thus omit the user index for the sake of explanation. Its extension to the multi-user case is straightforward.

For example, for a sufficiently small difference between the uplink and downlink carrier frequencies (e.g., less than 10% of the downlink carrier frequency), the uplink channel covariance matrix can be directly re-used for the downlink channel; i.e., $\boldsymbol{R}_d = \boldsymbol{R}_u$.

For another example, the linear relationship given by a so-called frequency calibration matrix may be exploited. Given a specific antenna array geometry, the array response vectors $\boldsymbol{a}_u(\theta)$ and $\boldsymbol{a}_d(\theta)$ may be measured at the uplink and downlink frequencies $f_u$ and $f_d$, as a function of the direction of arrival $\theta$. The array response vector $\mathbf{a}(\theta)$ for e.g., an $M$-element uniform linear array with antenna element spacing $\Delta$ at carrier frequency $f_c$ can be expressed as $\mathbf{a}(\theta) = [1, e^{j2\pi fc\Delta\sin\theta/c}, e^{j2\pi fc\Delta\sin\theta/c}, ..., e^{j2\pi fc(M-1)\Delta\sin\theta/c}]^T$, wherein c denotes the speed of light. Then, the frequency calibration matrix may be determined by calculating the matrices $\boldsymbol{Q}_u^{(k)} = \int_{\pi/S}^{\pi/S} \boldsymbol{a}_u(\theta)\boldsymbol{a}_u^H(\theta)e^{jkS\theta}d\theta$ and $\boldsymbol{Q}_d^{(k)} = \int_{\pi/S}^{\pi/S} \boldsymbol{a}_d(\theta)\boldsymbol{a}_d^H(\theta)e^{jkS\theta}d\theta$ for $k$ = -$K$, -$K$+1, ..., $K$. Here, $k$ denotes the index of a Fourier series. Then, construct $\boldsymbol{Q}_u = \left[\mathrm{vec}\left(\boldsymbol{Q}_u^{(-K)}\right), \mathrm{vec}\left(\boldsymbol{Q}_u^{(-K+1)}\right), ..., \mathrm{vec}\left(\boldsymbol{Q}_u^{(K)}\right)\right]$ and $\boldsymbol{Q}_d = \left[\mathrm{vec}\left(\boldsymbol{Q}_d^{(-K)}\right), \mathrm{vec}\left(\boldsymbol{Q}_d^{(-K+1)}\right), ..., \mathrm{vec}\left(\boldsymbol{Q}_d^{(K)}\right)\right]$.

The frequency calibration matrix may then be computed according to $\boldsymbol{A} = \boldsymbol{Q}_d\left(\boldsymbol{Q}_u^H \boldsymbol{Q}_u\right)^{-1}\boldsymbol{Q}_u^H$.

The downlink covariance matrix may now may estimated by computing $\boldsymbol{r}_d = \boldsymbol{A}\boldsymbol{r}_u$ and constructing $\boldsymbol{R}_d$ from $\boldsymbol{r}_d$, where $\boldsymbol{r}_d = \mathrm{vec}(\boldsymbol{R}_d)$ *and* $\boldsymbol{r}_u = \mathrm{vec}(\boldsymbol{R}_u)$.

Based on the (estimated) downlink channel covariance matrices, the base station 110 can generate a downlink pilot signal block jointly for all user terminals 120-1 to 120-K. For explanatory purposes, we again suppress the frequency dependence of the uplink and downlink channels. It is understood, however, that training and corresponding signal processing has to occur within each frequency interval over which the propagation channels are substantially constant. We consider the multi-user system 100 including base station 110 with $M$ antennas serving $K$ single-antenna terminals. Note that a multi-antenna terminal can be represented as multiple single-antenna terminals.

In the following we assume that the number of terminals $K$ and the number of downlink training symbols $\tau_d$ are pre-defined and fixed. Note that $\tau_d$ can be smaller than $M$. Let $\boldsymbol{g}_k$ denote an $M \times 1$ downlink propagation vector between the base station 110 and the $k$-th terminal 120-$k$. The downlink propagation vector has independent and identically distributed (i.i.d.) elements and the $M \times M$ spatial covariance matrix $\boldsymbol{R}_k = E[\boldsymbol{g}_k^* \boldsymbol{g}_k^T]$. As has been explained before, we assume that all channel covariance matrices $\boldsymbol{R}_k$, $\forall$ $k$ are known to the base station 110. For users with moderate velocities (e.g., 16km/h), the covariance matrices change only slowly with time, so that it is reasonable that they can be estimated by the base station 110 as has been described above.

According to the present disclosure, the joint downlink pilot signal $\Psi_d$ can be an "arbitrary" function $\Psi_d = f(\mathbf{R}_1,...,\mathbf{R}_K)$ of the downlink channel covariance matrices. Some example functions will be described below.

For example, the individual downlink covariance matrices can be normalized. For each terminal $k$, the respective downlink covariance matrix $\boldsymbol{R}_k$ can for example be scaled by $M \bullet \mathrm{tr}(\boldsymbol{R}_k)^{-1}$, yielding

$$\overline{\mathbf{R}}_k = M \bullet \mathrm{tr}(\mathbf{R}_k)^{-1}\mathbf{R}_k, \forall k,$$

where tr(.) denotes the matrix trace. The skilled person having benefit from the present disclosure will appreciate that the normalization could be skipped or other normalizations would be possible as well.

Then the $K$ (normalized) downlink covariance matrices can be combined, for example according to a weighted sum

$$\boldsymbol{R} = \sum_{k=1}^{K} \alpha_k \overline{\boldsymbol{R}}_k ,$$

where the real (scalar) weighting coefficients $\alpha_k$ can be used to prioritize the training signal for dedicated users. A default choice for the coefficients may be $\alpha_k = 1, \forall\ k$. In this case all users are treated equally.

Further, the joint downlink pilot signal $\Psi_d$ can be derived from the eigendecomposition of the combined downlink channel covariance matrix $\boldsymbol{R}$ by taking the first $\tau_d$ eigenvectors (corresponding to the $\tau_d$ largest eigenvalues of $\boldsymbol{R}$) according to

$$\boldsymbol{\Psi}_{\mathrm{d}}^{H} = \sqrt{\rho_{\mathrm{d}}} \boldsymbol{U}_{[1:\tau_{\mathrm{d}}]}$$

wherein $\mathbf{R} = \mathbf{U}\Lambda\mathbf{U}^H$ denotes the combined downlink channel covariance matrix, $\mathbf{U}$ the eigenvectors, A its eigenvalues, and $\rho_d$ denotes a downlink SNR.

One possible alternative function would be to construct $\boldsymbol{\Psi}_{\mathrm{d}}^{H}$ from the first $\tau_{\mathrm{d}}^{K} = \mathrm{floor}(\tau_{\mathrm{d}} / K)$ columns of each covariance matrix $\boldsymbol{R}_k$, with a subsequent orthonormalization of all concatenated columns. Thereby, two vectors in an inner product space are considered orthonormal if they are orthogonal and unit vectors.

The illustrated example describes a joint pilot signal block design that provides short training signals that are matched to (2nd order) downlink channel statistics. This enables the efficient operation of FDD massive MIMO systems also in situations when the channel coherence times are extremely small, e.g., when the number of coherence block symbols is smaller than the number of base station antennas.

An idea underlying the present disclosure is to exploit the subspace overlap of the individual downlink channel covariance matrices $\mathbf{R}_1, ..., \mathbf{R}_K$ in order to reduce the overall number of probed channel dimensions (i.e., reducing the overall number of pilot signals because each pilot signal probes a single dimension). By combining (e.g., summing up) the covariance matrices $\mathbf{R}_1,..., \mathbf{R}_K$ of the to-be-trained channels, overlapping subspace dimensions can be merged. As a result, the effective number of pilot symbols per channel, which are needed for achieving a specific target mean square error, decreases with the number of jointly trained channels.

In the following, we briefly describe example methods for the acquisition of uplink and downlink CSI (e.g., precise estimates of the channel coefficients between all base station antennas and terminal antennas) using the proposed joint downlink pilot signal $\Psi_d$.

In a first phase, the terminals 120-1 to 120-$K$ may collectively transmit on the uplink channel orthogonal pilot sequences of sample duration $\tau_u \geq K$, represented by a $\tau_u \times K$ unitary matrix, $\Psi_u$. Accordingly, the base station array receives a $M\times\tau_u$ signal

$$\mathbf{Y}_{\mathrm{u}} = \sqrt{\rho_{\mathrm{u}}\tau_{\mathrm{u}}}\,\mathbf{G}_{\mathrm{u}}\mathbf{\Psi}_{\mathrm{u}}^{\mathrm{H}} + \mathbf{V}_{\mathrm{u}} \qquad (1),$$

where the superscript "H" denotes "conjugate transpose", the matrix $\mathbf{V}_u$ is additive receiver noise, and $\rho_u$ is the UL SNR. Each of the $M$ base station antennas may correlate its received signal with each of the $K$ pilot sequences as follows to obtain a noisy version of the uplink matrix-valued channel:

$$\hat{\mathbf{G}}_{\mathrm{u}} = \mathbf{Y}_{\mathrm{u}}\mathbf{\Psi}_{\mathrm{u}} = \sqrt{\rho_{\mathrm{u}}\tau_{\mathrm{u}}}\,\mathbf{G}_{\mathrm{u}} + \mathbf{V}_{\mathrm{u}}' \ . \quad (2)$$

An appropriately scaled version of (2) constitutes the minimum mean-square (Bayes) estimate for the channel.

During a second phase, the base station antennas may transmit on the downlink channel the joint pilot signal of sample duration $\tau_d < M$, represented by matrix, $\Psi_d$. The $K$ terminals collectively receive a $K \times \tau_d$ signal,

$$\mathbf{Y}_{\mathrm{d}} = \sqrt{\frac{\rho_{\mathrm{d}}\tau_{\mathrm{d}}}{\mathrm{M}}}\mathbf{G}_{\mathrm{d}}^{\mathrm{T}}\mathbf{\Psi}_{\mathrm{d}}^{\mathrm{H}} + \mathbf{V}_{\mathrm{d}}, \quad (3)$$

which they may re-transmit on the uplink, with some optional scaling factor $\alpha$ designed to conform to power constraints. The base station receives a $M \times \tau_{\mathrm{d}}$ signal

$$\mathbf{Y}_{\mathrm{du}} = \sqrt{\alpha\rho_{\mathrm{u}}}\mathbf{G}_{\mathrm{u}}\left(\sqrt{\frac{\rho_{\mathrm{d}}\tau_{\mathrm{d}}}{\mathrm{M}}}\mathbf{G}_{\mathrm{d}}^{\mathrm{T}}\mathbf{\Psi}_{\mathrm{d}}^{\mathrm{H}} + \mathbf{V}_{\mathrm{d}}\right) + \mathbf{V}_{\mathrm{du}}. \quad (4)$$

Each of the $M$ base station antennas correlates its received signal with the joint downlink pilot signal $\Psi_{\mathrm{d}}$ which results in a $M \times M$ signal,

$$\mathbf{Y}_{\mathrm{du}}\mathbf{\Psi}_{\mathrm{d}} = \sqrt{\alpha\rho_{\mathrm{u}}}\mathbf{G}_{\mathrm{u}}\left(\sqrt{\frac{\rho_{\mathrm{d}}\tau_{\mathrm{d}}}{\mathrm{M}}}\mathbf{G}_{\mathrm{d}}^{\mathrm{T}} + \mathbf{V}'_{\mathrm{d}}\right) + \mathbf{V}'_{\mathrm{du}}. \quad (5)$$

The uplink pilots have already provided an estimate for the uplink channel, so the base station can now estimate the downlink channel by elementary means (matched-filter, zero-forcing, or minimum mean-square linear). A possible estimate $\hat{\mathbf{G}}_{\mathrm{d}}^{\mathrm{T}}$ for the downlink channels is given e.g., by

$$\hat{\mathbf{G}}_{\mathrm{d}}^{\mathrm{T}} = \left(\hat{\mathbf{G}}_{\mathrm{u}}\right)^{+}\mathbf{Y}_{\mathrm{du}}\left(\mathbf{\Psi}_{d}^{H}\right)^{+},$$

where the operator $(.)^{+}$ denotes the pseudo-inverse.

The base station 110 may estimate the individual downlink channels using a Minimum Mean Squared Error (MMSE) estimator. The $k$-th downlink channel can be obtained by

$$\boldsymbol{g}_k^{\mathrm{est}} = \left[\boldsymbol{R}_k\boldsymbol{\Psi}_{\mathrm{d}}^{\mathrm{H}}\left(\boldsymbol{I}_{\tau_{\mathrm{d}}} + \boldsymbol{\Psi}_{\mathrm{d}}\boldsymbol{R}_k\boldsymbol{\Psi}_{\mathrm{d}}^{\mathrm{H}}\right)^{-1}\boldsymbol{y}_k\right]^{*}$$

by assuming that the elements of $\boldsymbol{V}_{\mathrm{d}}$ are i.i.d. complex Gaussian with unit variance. Here, $(.)^{*}$ denote the complex conjugate. Note that is MMSE estimator is only an approximation, because it does not incorporate the estimation error that arose when the base station extracted the CSI-bearing downlink pilot signal $\boldsymbol{Y}_{\mathrm{d}}$ from Eq. (4) by using imperfect uplink CSI and a noise-limited uplink channel.

Under the idealizing assumptions, the Mean Square Error (MSE) of the channel estimator for the $k$-th downlink channel is given by

$$\mathrm{MSE}(\boldsymbol{g}_k, \boldsymbol{\Psi}_{\mathrm{d}}) = \frac{1}{M}\mathrm{tr}\left(\boldsymbol{R}_k - \boldsymbol{R}_k\boldsymbol{\Psi}_{\mathrm{d}}^{\mathrm{H}}\left(\boldsymbol{I}_{\tau_{\mathrm{d}}} + \boldsymbol{\Psi}_{\mathrm{d}}\boldsymbol{R}_k\boldsymbol{\Psi}_{\mathrm{d}}^{\mathrm{H}}\right)^{-1}\boldsymbol{\Psi}_{\mathrm{d}}\boldsymbol{R}_k\right).$$

During the channel training procedure, the base station 110 transmits the joint pilot signal $\boldsymbol{\Psi}_{\mathrm{d}}^{H}$ in the downlink. Since the pilots are unknown to the terminals, they cannot process these themselves and thus, directly feed back the CSI-bearing signals in the uplink. Assuming uplink CSI knowledge at the base station (which can be obtained by a dedicated uplink training as in TDD systems), the base station is able to separate the feedback signals from the individual terminals, and thus can estimate the downlink channels. Note that this analog CSI feedback method has the advantage that the terminals 120-1 to 120-$K$ do not need to estimate the downlink channels themselves. Moreover, there is no need for CSI compression and explicit feedback in the uplink, so that the terminal complexity can be strongly reduced. The entire process of obtaining uplink and downlink CSI requires $2\tau_d + \tau_u$ resource samples. One should note that the proposed method dissolves the conventional pilot length requirement $\tau_d \geq M$. That is, it allows the design of arbitrarily short pilot signal (which minimize the DL channel estimation error) by exploiting knowledge of the channel's second order statistics.

Examples of the present disclosure can also be used with explicit CSI feedback. The explicit CSI feedback method comprises the downlink pilot transmission by the base station 110, the channel estimation at the individual terminals 120-1 to 120-K, and the CSI compression and feedback over a dedicated uplink channel. In the following, we consider the explicit CSI feedback for a single terminal with index *k*, its extension to multiple terminals is straight-forward. We denote the downlink channel between the base station 110 and the *k*-th terminal 120-*k* by $\boldsymbol{g}_{\mathrm{d,k}}^{\mathrm{T}}$.

The base station antennas 112-1 to 112-*M* transmit on the downlink channel the joint pilot signal $\boldsymbol{\Psi}_{\mathrm{d}}^{H}$ of sample duration $\tau_d$. The *k*-th terminal receives a $1 \times \tau_d$ signal

$$\boldsymbol{y}_{\mathrm{d,k}}^{\mathrm{T}} = \sqrt{\frac{\rho_{\mathrm{d}}\tau_{\mathrm{d}}}{\mathrm{M}}}\boldsymbol{g}_{\mathrm{d,k}}^{\mathrm{T}}\boldsymbol{\Psi}_{\mathrm{d}}^{\mathrm{H}} + \boldsymbol{V}_{\mathrm{d}}$$

Based on the knowledge of joint pilot signal $\boldsymbol{\Psi}_{\mathrm{d}}^{H}$, the *k*-th terminal can estimate the its downlink channel, e.g., by

$$\hat{\boldsymbol{g}}_{\mathrm{d,k}}^{\mathrm{T}} = \boldsymbol{y}_{\mathrm{d,k}}^{\mathrm{T}}\left(\boldsymbol{\Psi}_{d}^{H}\right)^{+}$$

Then, the terminal 120-*k* can compress and feed back its estimate $\hat{\boldsymbol{g}}_{\mathrm{d,k}}^{\mathrm{T}}$ to the base station 110.

Note that the knowledge about the joint downlink pilot signal $\boldsymbol{\Psi}_{d}^{H}$ is needed by the terminal 120-*k* in this example in order to perform the channel estimation. Therefore, we can assume a dedicated (logical) downlink channel between the base station 110 and the terminal 120-1 to 120-*K*, which informs the terminal about the employed downlink pilot signal.

Since the downlink channel covariance matrices change only slowly with time, our designed pilot signal block $\boldsymbol{\Psi}_{d}^{H}$ remains constant for several random realizations of the channel vectors. This leads to the so-called Grid of Beams (GoB) interpretation using a limited number of possible precoding vectors building up a grid of beams with spatial separation. A key idea of the GoB approach is to reduce the (DL) channel dimension by transforming it into a grid of $P(<M)$ beams. Each beam appears then as a virtual antenna port. Typically, the number *P* of virtual antenna ports can be much smaller than the number *M* of physical antenna ports. Thus, precoding multiple data streams (e.g., ZF-precoding) can be performed solely on the effective channel with the reduced dimension of *P.* A key motivation is to reduce the training overhead from a larger number of pilot symbols down to a smaller number of pilot symbols. In addition, the computational complexity of the spatial precoding/equalization at the BS is reduced.

The example of **FIG. 4** shows a concatenation of a slowly-varying *P* x *M* dimensional GoB precoder 420 downstream to a *K* x *P* dimensional fast-varying spatial precoder ***W*** 410. According to the example of FIG. 4, is proposed to use the $M \times \tau_d$ downlink pilot signal matrix $\boldsymbol{\Psi}_{d}^{H}$ as a slowly varying GoB precoder 420, so that we have $P=\tau_d$. The GoB precoder 420 transforms the original *K* x *M* DL channel $\boldsymbol{G}_{\mathrm{d}}^{\mathrm{T}}$ into the effective *K* x *P* channel $\tilde{\boldsymbol{G}}_{\mathrm{d}}^{\mathrm{T}} = \boldsymbol{G}_{\mathrm{d}}^{\mathrm{T}}\boldsymbol{\Psi}_{d}^{H}$.

The downlink CSI acquisition methods as described above can be applied with minor modifications. For example, downlink CSI estimator for analog CSI feedback becomes $\hat{\tilde{\boldsymbol{G}}}_{\mathrm{d}}^{\mathrm{T}} = \left(\hat{\boldsymbol{G}}_{\mathrm{u}}\right)^{+}\boldsymbol{Y}_{\mathrm{du}}$ and the downlink CSI estimator for explicit CSI feedback becomes

$$\hat{\tilde{\boldsymbol{g}}}_{\mathrm{d,k}}^{\mathrm{T}} = \boldsymbol{y}_{\mathrm{d,k}}^{\mathrm{T}}.$$

One should note that for the second case (i.e., explicit CSI feedback), the terminals do not need to know the utilized GoB precoder 420 and/or pilot signal $\boldsymbol{\Psi}_d^H$ . Effectively, the terminals feed back their receive signals as done in the analog CSI feedback method, but they are supposed to apply feedback compression and a dedicated feedback channel.

Based on the acquired downlink CSI (for the effective channel $\hat{\tilde{\boldsymbol{G}}}_{\mathrm{d}}^{\mathrm{T}}$ ), the base station 110 can optionally generate a fast varying *K* x *P* spatial precoder **W** 410 according to some criteria, e.g. zero-forcing $\boldsymbol{W}^{\mathrm{ZF}} \propto \hat{\tilde{\boldsymbol{G}}}_{\mathrm{d}}^{*}(\hat{\tilde{\boldsymbol{G}}}_{\mathrm{d}}^{\mathrm{T}}\hat{\tilde{\boldsymbol{G}}}_{\mathrm{d}}^{*})^{-1}$, which fully can suppress any inter-user interference. The resulting user data transmission according to FIG. 4 can eventually be described by

$$\boldsymbol{Y}_{\mathrm{d}} = \sqrt{\eta}\boldsymbol{G}_{\mathrm{d}}^{\mathrm{T}}\boldsymbol{\Psi}_{\mathrm{d}}^{\mathrm{H}}\boldsymbol{W}\boldsymbol{D} + \boldsymbol{V}_{\mathrm{d}},$$

where $\eta$ denotes a power control coefficient, and ***D*** represents the *K* x *N* matrix of user data (i.e., the *k*-th row represents the *N* IQ-baseband samples for user *k*), and $\boldsymbol{Y}_{\mathrm{d}}$ represents the *K* x *N* matrix of received data.

Note that the slowly varying GoB matrix $\boldsymbol{\Psi}_d^H$ remains constant over reasonably large periods of time, because it only relies on the second-order statistics of the downlink channels which change only slowly with time. The instantaneous fluctuations (i.e., fast fading) of the DL channels are tracked with the CSI acquisition strategies described above, and the fast varying spatial precoder ***W*** 410 should be adapted accordingly.

The GoB approach is agnostic w.r.t. the type of channel estimation and precoding. That is, classical downlink channel training and feedback methods can now be applied; e.g., (orthogonal) pilots that are known to the terminals, which enables these to perform the channel estimation themselves, and to feedback the (possibly compressed) downlink CSI in the uplink. Alternatively, other the channel training methods can be applied, too.

**FIG. 5** illustrates a block diagram of an apparatus or base station 500 employing examples of the present disclosure.

Base station 500 comprises a receiver 540 coupled to the *M* base station antennas and configured to generate *M* baseband signal streams. The *M* baseband signal streams are fed to a uplink and downlink CSI estimation processor 550 which is configured to supply instantaneous uplink CSI to an uplink and downlink channel covariance matrix processing circuitry 510 and an uplink spatial equalizer 570. For example, the instantaneous uplink CSI can correspond to a noisy version of the uplink matrix-valued channel $\mathbf{G}_{\mathrm{u}}$ ( $\mathbf{Y}_{\mathrm{u}}\mathbf{\Psi}_{\mathrm{u}} = \sqrt{\rho_{\mathrm{u}}\tau_{\mathrm{u}}}\mathbf{G}_{\mathrm{u}} + \mathbf{V}'_{\mathrm{u}}$ ). Based on this, the covariance estimation processor 510 can estimate the *K* downlink channel covariance matrices and provide them to pilot and precoder signal generation circuitry 520. Pilot and precoder signal generation circuitry 520 can then generate the joint downlink pilot signal $\boldsymbol{\Psi}_{\mathrm{d}}^H$ as described above. The joint downlink pilot signal $\boldsymbol{\Psi}_{\mathrm{d}}^H$ can on the one hand be jointly transmitted to the terminals via transmitter 530. A fed back version of the joint downlink pilot signal is then again received via receiver 540 and provided to uplink and downlink CSI estimation processor 550 which can then determine instantaneous downlink CSI as described above. This instantaneous downlink CSI can be provided to a spatial precoding circuitry 560. As has been explained before, the spatial precoding circuitry 560 can comprise a (slowly varying) GoB precoder based on the joint downlink pilot signal $\boldsymbol{\Psi}_{\mathrm{d}}^H$ .

For the channel training procedure described for the joint downlink pilot signal, we also propose an optimized FDD frame structure that allows the timely acquisition of uplink and downlink CSI by means of pilot/training signals. The goal is to minimize the time gap between the CSI acquisition and its application.

The uplink CSI is needed for the uplink data processing (e.g., spatial filtering) as well as for the extraction of the downlink CSI feedback signals. Therefore, in order not to delay the downlink CSI acquisition, we propose to perform the uplink training immediately before the downlink training and corresponding feedback in the uplink, as shown in **FIG. 6.** In other words, no other (data) transmission is used between uplink and downlink training. One should note, that the illustrated example requires the buffering the uplink data, because it is received before the corresponding uplink training. However, at least for small channel coherence times the buffer size and the corresponding uplink data processing delay are quite limited; e.g., in the order of the coherence time.

In order to demonstrate the effectiveness of the proposed concepts, we conducted Monte Carlo simulations for a single-cell setup. We consider a base station with *M*=100 antennas. Each covariance matrix $\boldsymbol{R}_k$ follows the exponential model with

$$\boldsymbol{R}_k = \begin{bmatrix} 1 & \left(a_k^1\right)^* & \cdots & \left(a_k^{M-1}\right)^* \\ a_k^1 & 1 & & \\ \vdots & & \ddots & \\ a_k^{M-1} & & & 1 \end{bmatrix}$$

where $a_k = \alpha_k e^{i\varphi_k}$, with $\alpha_k$ taken uniform randomly from the interval [0.5,0.9], and $\varphi_k$ taken uniform randomly from the interval [0,2π]. We normalized all channel vectors such that $\mathrm{tr}(\boldsymbol{R}_k) = M, \forall k$. For simplicity, we assumed an ideal uplink channel; that is, noise-free and perfect uplink CSI at the base station.

In **FIG. 7,** we plot the average mean square channel estimation error (MSE) for a base station with $M$=100 antennas, and a downlink SNR of 20dB. The MSE is shown as a function of the number of downlink pilots $\tau_d$, for various numbers of terminals $K$. Focusing on a target MSE of 0.1, the downlink training for a single terminal ($K$=1) requires 57 pilot signals. By jointly designing and estimating the channels for e.g. $K$=16 users, our method requires only 82 pilot symbols, which is muss less than 16*57 pilot signals that would be required for a separate training of the 16 users.

In **FIG. 8,** we evaluate the achievable spectral efficiency for a GoB system with $M$=100 antennas at the base station and a downlink SNR of 10dB. We compare the DFT-matrix based GoB against our adaptive GoB, where the number of beams is parameterized by $P$. The simulations include the estimation of the ($P$-dimensional) downlink channels (under the idealizing uplink channel assumptions), and the application of the estimated channels for the calculation of a ($P$-dimensional) zero-forcing precoder. Given the achievable link SINRs, we calculated the Shannon rates, and scaled the corresponding sum rate by (Tc-P)/T in order to achieve the downlink spectral efficiency. We set the channel coherence time Tc to 100, which corresponds to an Urban Micro channel with a RMS delay spread 0.25μs, and a user speed of 16km/h.

Both Figures show the spectral efficiency as a function of the number of terminals $K$, for various sizes $P$ of the GoB precoder. Comparing the left Figure (i.e., the DFT-matrix based GoB) with the right Figure (i.e., our adpative GoB), we observe that the maximum achievable spectral efficiency is increased by 23%.

Examples of the present disclosure can reduce the downlink channel training overhead and can thus improve the spectral efficiency of Massive MIMO FDD systems with short channel coherence times.

Some examples can be characterized by a change in the joint DL pilot signal w.r.t. a change in the DL channel covariance matrices. Said differently, the DL pilot signal is adaptive w.r.t. the channel covariance matrices. The adpative pilot signal can reduce the mean square error of a DL channel estimator.

Similarly, the P-dimensional subspace that is spanned by precoded DL transmit signals of the BS adapts to a change of a channel covariance matrix, which indicates an adaptive grid of beams.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and examples of the invention, as well as specific examples thereof, are intended to encompass equivalents thereof.

Functional blocks shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, such as "a processor", "a controller", etc. as well as hardware capable of executing software in association with appropriate software. Moreover, any entity described herein as functional block, may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a programmable hardware component or processor, whether or not such hardware component or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other examples may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some examples a single step may include or may be broken into multiple sub steps. Such sub steps may be included and part of the disclosure of this single step unless explicitly excluded.

## Claims

**1.** An apparatus (200) for a base station (110) of a wireless communication system (100), the base station comprising a plurality of base station antennas (112) and configured to communicate with a plurality of user terminals (120), the apparatus comprising:

downlink channel covariance matrix processing circuitry (210) configured to generate a plurality of downlink channel covariance matrices (214), wherein a respective downlink channel covariance matrix is related to a respective downlink channel between the plurality of base station antennas and a respective user terminal; and output signal generation circuitry (220) configured to generate an output signal (222) for the plurality of user terminals based on a combination of the plurality of downlink channel covariance matrices.

**2.** The apparatus (200) of claim 1, wherein the output signal generation circuitry (220) is configured to generate a joint downlink pilot signal common to the plurality of user terminals based on the combination of the plurality of downlink channel covariance matrices.

**3.** The apparatus (200) of claim 1, wherein the downlink channel covariance matrix processing circuitry (210) is configured to generate a downlink channel covariance matrix based on uplink channel state information related to an uplink channel between a respective user terminal and the plurality of base station antennas.

**4.** The apparatus (200) of claim 1, wherein the downlink channel covariance matrix processing circuitry (210) is configured to normalize each downlink channel covariance matrix of the plurality of downlink channel covariance matrices.

**5.** The apparatus (200) of claim 4, wherein the downlink channel covariance matrix processing circuitry is configured to normalize a $k$-th downlink channel covariance matrix $\boldsymbol{R}_k$ in accordance with

$$\overline{\mathbf{R}}_k = M \bullet \mathrm{tr}(\mathbf{R}_k)^{-1}\mathbf{R}_k, \forall\, k$$

wherein tr(.) denotes the matrix trace, $M$ the number of base station antennas, and $\overline{\mathbf{R}}_k$ the normalized $k$-th downlink channel covariance matrix.

**6.** The apparatus (200) of claim 1, wherein the downlink channel covariance matrix processing circuitry (210) is configured to sum the plurality of downlink channel covariance matrices to generate a combined downlink channel covariance matrix.

**7.** The apparatus (200) of claim 6, wherein the downlink channel covariance matrix processing circuitry (210) is configured to sum the plurality of $K$ downlink channel covariance matrices in accordance with

$$\boldsymbol{R} = \sum_{k=1}^{K} \alpha_k \overline{\boldsymbol{R}}_k$$

wherein $\alpha_k$ denotes a real-valued priority factor for the $k$-th user terminal and **R** the combined downlink channel covariance matrix.

**8.** The apparatus (200) of claim 2, wherein the output signal generation circuitry (220) is configured to generate the joint downlink pilot signal based on an eigendecomposition of a combined downlink channel covariance matrix.

**9.** The apparatus (200) of claim 2, wherein the output signal generation circuitry (220) is configured to generate the joint downlink pilot signal based on $\tau_\mathrm{d}$ eigenvectors corresponding to the $\tau_\mathrm{d}$ largest eigenvalues of the combined downlink channel covariance matrix.

**10.** The apparatus (200) of claim 9, wherein the output signal generation circuitry (220) is configured to generate the joint downlink pilot signal in accordance with

$$\mathbf{\Psi}_\mathrm{d}^H = \sqrt{\rho_\mathrm{d}}\,\mathbf{U}_{[1:\tau_\mathrm{d}]}$$

wherein $\mathbf{R} = \mathbf{U}\Lambda\mathbf{U}^H$ denotes the combined downlink channel covariance matrix, **U** the eigenvectors, A its eigenvalues, and $\rho_\mathrm{d}$ denotes a downlink Signal-to-Noise Ratio.

**11.** The apparatus (200) of claim 2, wherein the output signal generation circuitry (220) is configured to generate the joint downlink pilot signal based on a concatenation of the first $\tau_\mathrm{d}^K = \mathrm{floor}(\tau_\mathrm{d}/K)$ columns of each downlink channel covariance matrix $\boldsymbol{R}_k$ and a subsequent orthonormalization of the concatenated columns.

**12.** The apparatus (200) of claim 1, further comprising:

receiver circuitry (240) configured to receive, from the plurality of user terminals (120), a retransmitted version of the joint downlink pilot signal, the retransmitted version of the joint downlink pilot signal comprising the joint downlink pilot signal received by the plurality of user terminals via respective downlink channels and retransmitted to the base station (110) by the plurality of user terminals via respective uplink channels.

**13.** The apparatus (200) of claim 12, further comprising:

downlink channel estimation circuitry (250) configured to estimate one or more downlink channels between the plurality of base station antennas (112) and one or more respective user terminals (120) based on the received retransmitted version of the joint downlink pilot signal, the joint downlink pilot signal, and an estimate of one or more uplink channels between one or more respective user terminals and the plurality of base station antennas.

**14.** The apparatus (200) of claim 13, wherein the downlink channel estimation circuitry (250) is configured to estimate the one or more downlink channels based on the Minimum Mean Squared Error, MMSE, criterion.

**15.** The apparatus of claim 1, wherein the output signal generation circuitry (220) is configured to generate an $M \times P$, $P < M$, precoding matrix for reducing a downlink channel dimension based on a combination of the plurality of downlink channel covariance matrices and wherein the apparatus (200) further comprises a channel precoder (260) configured to generate, using the precoding matrix, a plurality of $P < M$ output signals based on a plurality of $M$ input signals.

**16.** The apparatus (200) of claim 15, wherein the output signal generation circuitry (220) is configured to generate the precoding matrix based on an eigendecomposition of a combined downlink channel covariance matrix.

**17.** The apparatus (200) of claim 15, wherein the output signal generation circuitry (220) is configured to generate the precoding matrix based on *P* eigenvectors corresponding to the *P* largest eigenvalues of the combined downlink channel covariance matrix.

**18.** The base station (200) of claim 17, wherein the output signal generation circuitry (220) is configured to generate the precoding matrix in accordance with

$$W = \sqrt{\rho_d} U_{[1:P]}$$

wherein $\mathbf{R} = \mathbf{U}\Lambda\mathbf{U}^H$ denotes the combined downlink channel covariance matrix, **U** the eigenvectors, A its eigenvalues, and $\rho_d$ denotes a downlink Signal-to-Noise Ratio.

**Amended claims in accordance with Rule 137(2) EPC.**

**1.** An apparatus (200) for a base station (110) of a wireless communication system (100), the base station comprising a plurality of base station antennas (112) and configured to communicate with a plurality of user terminals (120), the apparatus comprising:

downlink channel covariance matrix processing circuitry (210) configured to generate a plurality of downlink channel covariance matrices (214), wherein a respective downlink channel covariance matrix is related to a respective downlink channel between the plurality of base station antennas and a respective user terminal; and output signal generation circuitry (220) configured to generate an output signal (222) for the plurality of user terminals based on a combination of the plurality of downlink channel covariance matrices,
wherein the output signal generation circuitry (220) is configured to generate a joint downlink pilot signal common to the plurality of user terminals based on the combination of the plurality of downlink channel covariance matrices,
wherein the output signal generation circuitry (220) is configured to generate the joint downlink pilot signal based on a concatenation of the first $\tau_d^K = \mathrm{floor}(\tau_d / K)$ columns of each downlink channel covariance matrix $\mathbf{R}_k$ and a subsequent orthonormalization of the concatenated columns, wherein $\tau_d$ denotes the number of pilot sequences and *K* denotes the number of user terminals.

**2.** The apparatus (200) of claim 1, wherein the downlink channel covariance matrix processing circuitry (210) is configured to generate a downlink channel covariance matrix based on uplink channel state information related to an uplink channel between a respective user terminal and the plurality of base station antennas.

**3.** The apparatus (200) of claim 1, wherein the downlink channel covariance matrix processing circuitry (210) is configured to normalize each downlink channel covariance matrix of the plurality of downlink channel covariance matrices.

**4.** The apparatus (200) of claim 3, wherein the downlink channel covariance matrix processing circuitry is configured to normalize a *k*-th downlink channel covariance matrix $\mathbf{R}_k$ in accordance with

$$\overline{\mathbf{R}}_k = M \bullet \mathrm{tr}(\mathbf{R}_k)^{-1} \mathbf{R}_k, \forall k$$

wherein tr(.) denotes the matrix trace, *M* the number of base station antennas, and $\overline{\mathrm{R}}_k$ the normalized *k*-th downlink channel covariance matrix.

**5.** The apparatus (200) of claim 1, wherein the downlink channel covariance matrix processing circuitry (210) is configured to sum the plurality of downlink channel covariance matrices to generate a combined downlink channel covariance matrix.

**6.** The apparatus (200) of claim 5, wherein the downlink channel covariance matrix processing circuitry (210) is configured to sum the plurality of K downlink channel covariance matrices in accordance with

$$\boldsymbol{R} = \sum_{k=1}^{K} \alpha_k \overline{\boldsymbol{R}}_k$$

wherein $\alpha_k$ denotes a real-valued priority factor for the $k$-th user terminal and **R** is the combined downlink channel covariance matrix, and $\overline{\mathbf{R}}_k$ is a normalized $k$-th downlink channel covariance matrix.

**7.** The apparatus (200) of claim 1, wherein the output signal generation circuitry (220) is configured to generate the joint downlink pilot signal based on an eigendecomposition of a combined downlink channel covariance matrix.

**8.** The apparatus (200) of claim 1, wherein the output signal generation circuitry (220) is configured to generate the joint downlink pilot signal based on $\tau_d$ eigenvectors corresponding to the $\tau_d$ largest eigenvalues of the combined downlink channel covariance matrix.

**9.** The apparatus (200) of claim 8, wherein the output signal generation circuitry (220) is configured to generate the joint downlink pilot signal in accordance with

$$\mathbf{\Psi}_{\mathrm{d}}^{H} = \sqrt{\rho_{\mathrm{d}}}\,\mathbf{U}_{[1:\tau_{\mathrm{d}}]}$$

wherein $\mathbf{R} = \mathbf{U}\Lambda\mathbf{U}^H$ denotes the combined downlink channel covariance matrix, **U** is eigenvectors of **R**, $\Lambda$ is eigenvalues of **R**, $\mathbf{U}_{[1:\tau d]}$ is the $\tau_d$ eigenvectors corresponding to the $\tau_d$ largest eigenvalues of **R**, and $\rho_d$ denotes a downlink Signal-to-Noise Ratio.

**10.** The apparatus (200) of claim 1, further comprising:
receiver circuitry (240) configured to receive, from the plurality of user terminals (120), a retransmitted version of the joint downlink pilot signal, the retransmitted version of the joint downlink pilot signal comprising the joint downlink pilot signal received by the plurality of user terminals via respective downlink channels and retransmitted to the base station (110) by the plurality of user terminals via respective uplink channels.

**11.** The apparatus (200) of claim 10, further comprising:
downlink channel estimation circuitry (250) configured to estimate one or more downlink channels between the plurality of base station antennas (112) and one or more respective user terminals (120) based on the received retransmitted version of the joint downlink pilot signal, the joint downlink pilot signal, and an estimate of one or more uplink channels between one or more respective user terminals and the plurality of base station antennas.

**12.** The apparatus (200) of claim 11, wherein the downlink channel estimation circuitry (250) is configured to estimate the one or more downlink channels based on the Minimum Mean Squared Error, MMSE, criterion.

**13.** The apparatus of claim 1, wherein the output signal generation circuitry (220) is configured to generate an $M \times P$, $P < M$, precoding matrix for reducing a downlink channel dimension based on a combination of the plurality of downlink channel covariance matrices and wherein the apparatus (200) further comprises a channel precoder (260) configured to generate, using the precoding matrix, a plurality of $P < M$ output signals based on a plurality of $M$ input signals.

**14.** The apparatus (200) of claim 13, wherein the output signal generation circuitry (220) is configured to generate the precoding matrix based on an eigendecomposition of a combined downlink channel covariance matrix.

**15.** The apparatus (200) of claim 13, wherein the output signal generation circuitry (220) is configured to generate the precoding matrix based on $P$ eigenvectors corresponding to the $P$ largest eigenvalues of the combined downlink channel covariance matrix.

**16.** The base station (200) of claim 15, wherein the output signal generation circuitry (220) is configured to generate the precoding matrix in accordance with

$$W = \sqrt{\rho_d} U_{[1:P]}$$

wherein $R = \mathbf{U}\Lambda\mathbf{U}^H$ denotes the combined downlink channel covariance matrix, U the eigenvectors, $\Lambda$ its eigenvalues, and $\rho_d$ denotes a downlink Signal-to-Noise Ratio.

FIG. 1

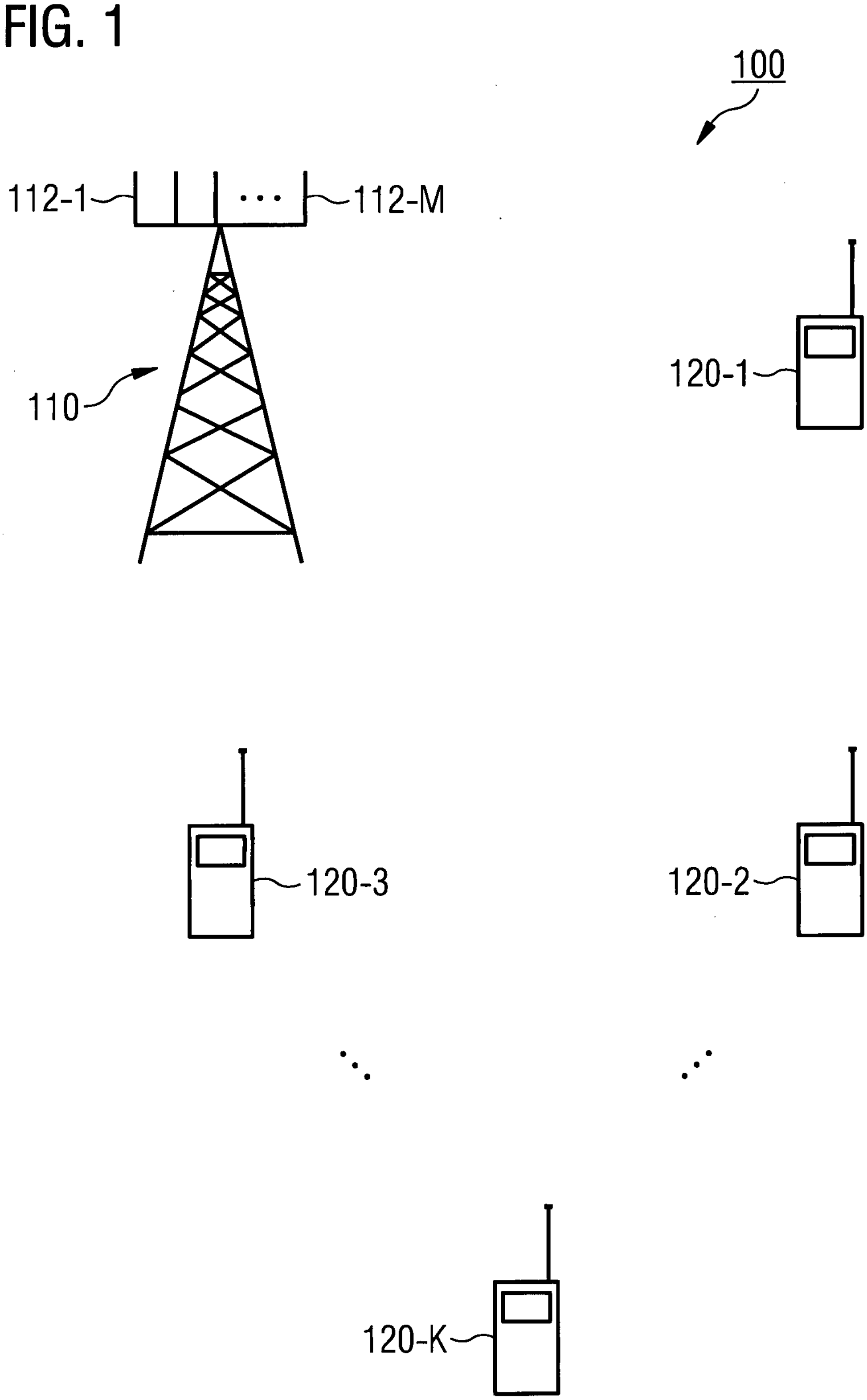

FIG. 2

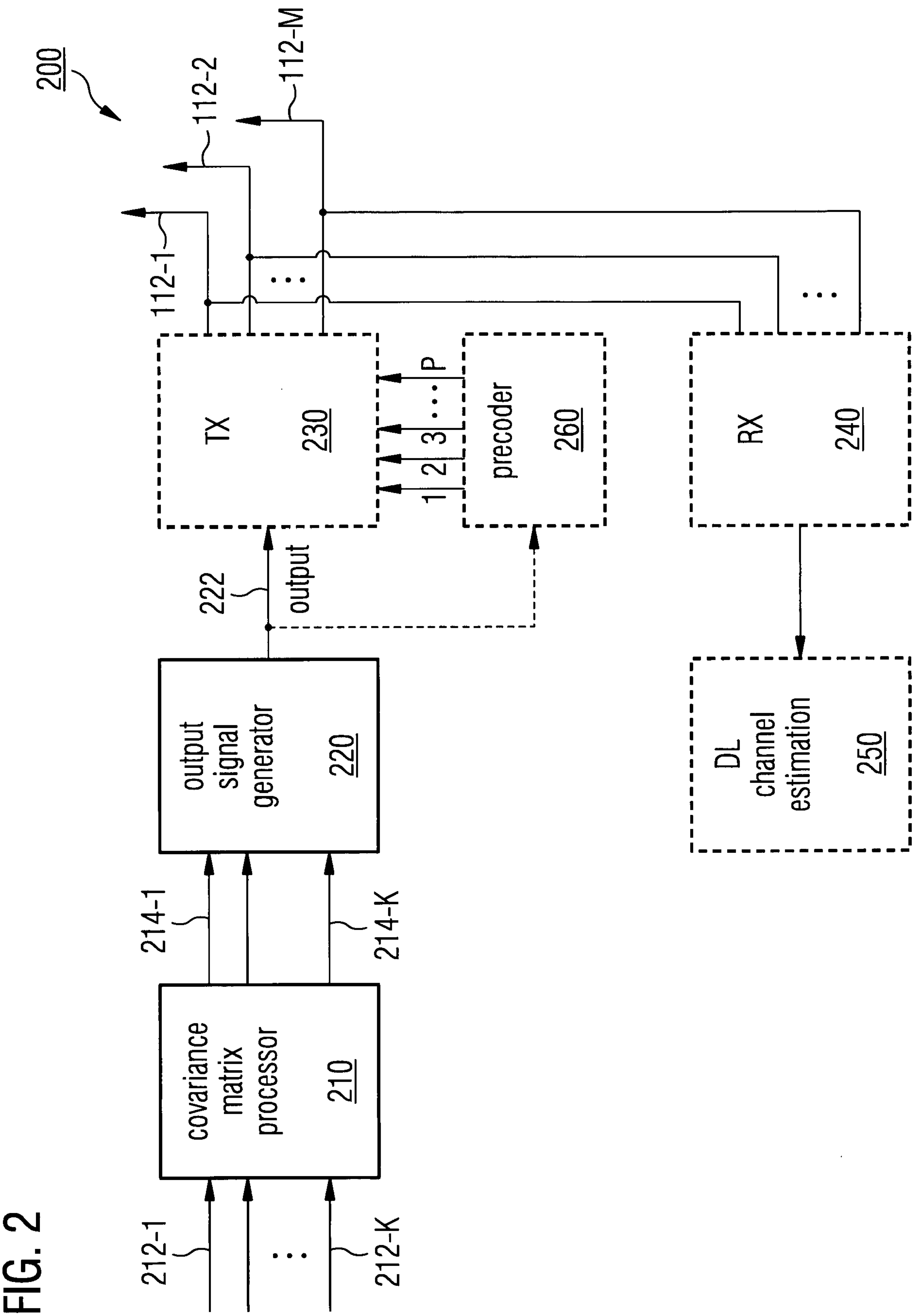
200
112-1
112-2
112-M
TX
230
precoder
260
1 2 3 ... P
RX
240
222
output
output signal generator
220
DL channel estimation
250
214-1
214-K
covariance matrix processor
210
212-1
212-K

FIG. 3

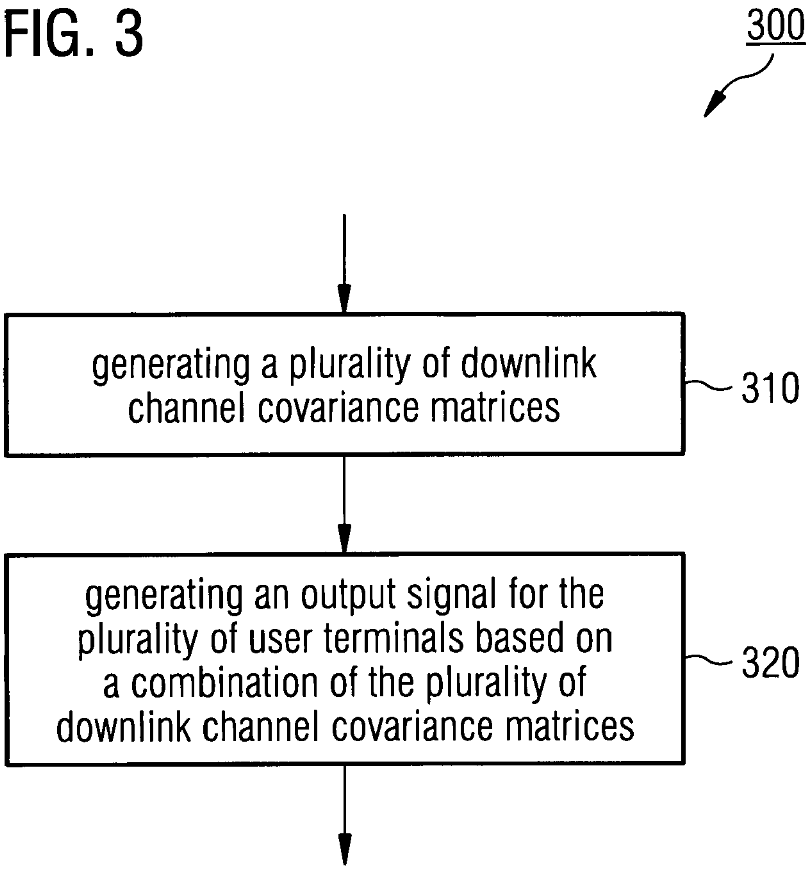
300
generating a plurality of downlink channel covariance matrices
310
generating an output signal for the plurality of user terminals based on a combination of the plurality of downlink channel covariance matrices
320

FIG. 4

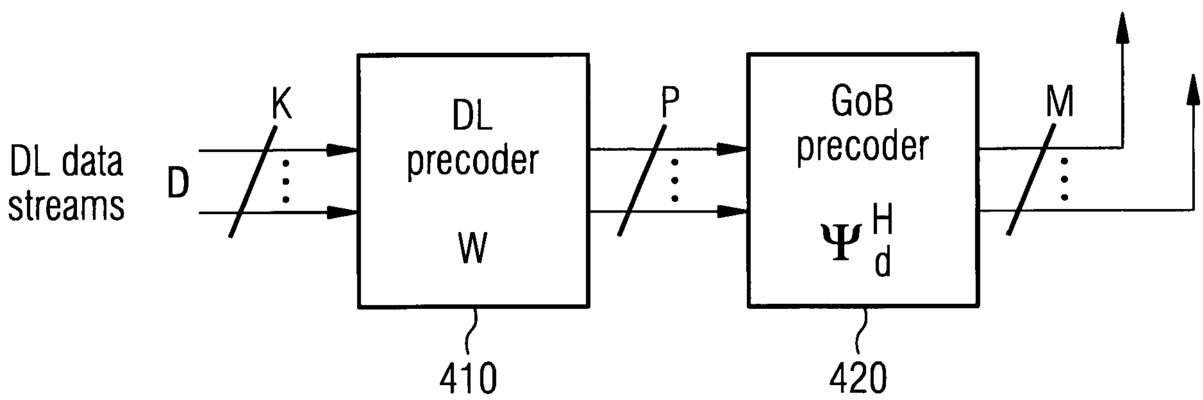
DL data streams
D
K
DL precoder
W
P
GoB precoder
$\Psi_d^H$
M
410
420

FIG. 5

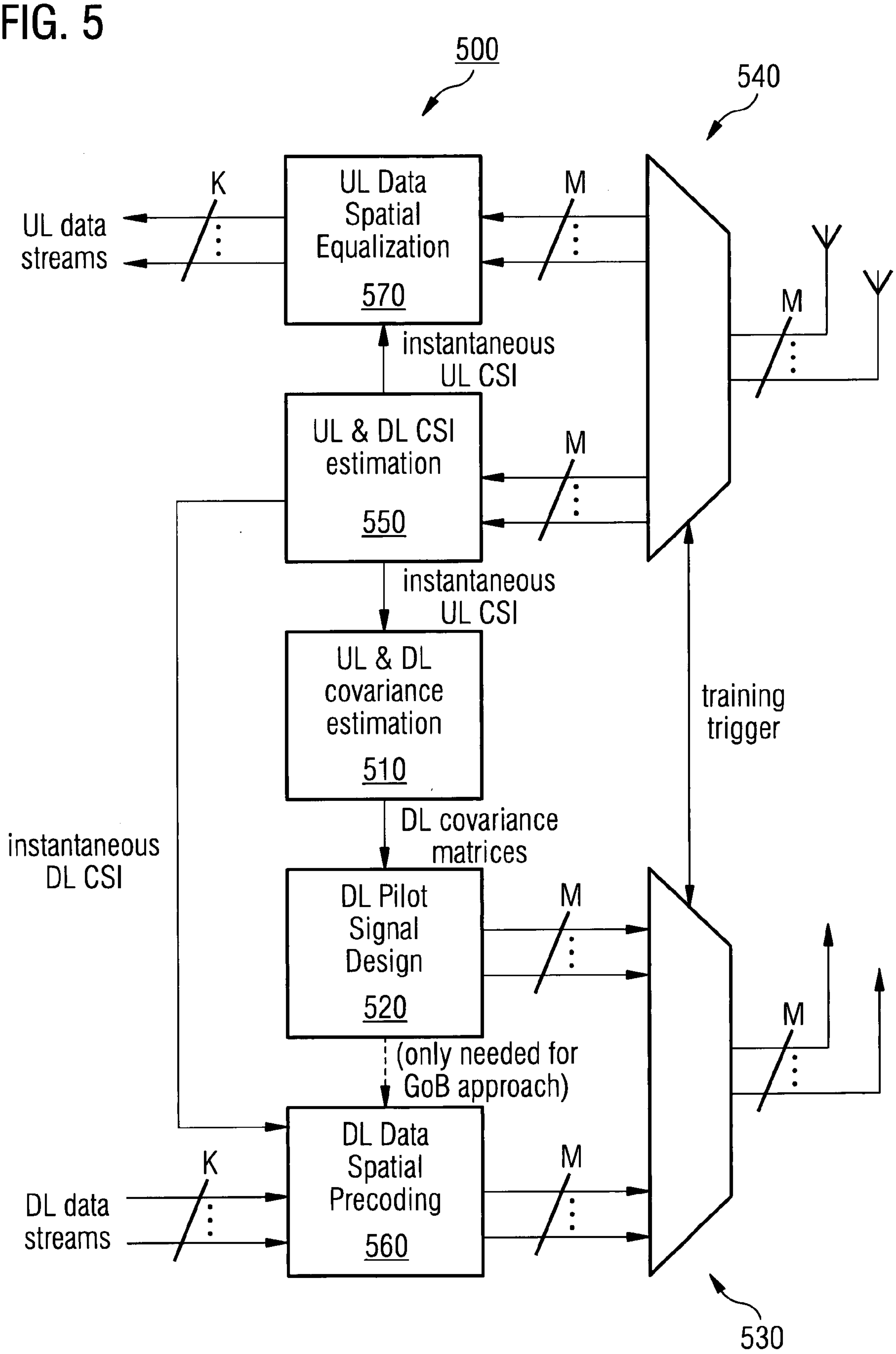
500
540
UL data
streams
K
UL Data
Spatial
Equalization
570
M
M
instantaneous
UL CSI
UL & DL CSI
estimation
550
M
instantaneous
UL CSI
UL & DL
covariance
estimation
510
training
trigger
DL covariance
matrices
instantaneous
DL CSI
DL Pilot
Signal
Design
520
M
M
(only needed for
GoB approach)
DL Data
Spatial
Precoding
560
DL data
streams
K
M
530

FIG. 6

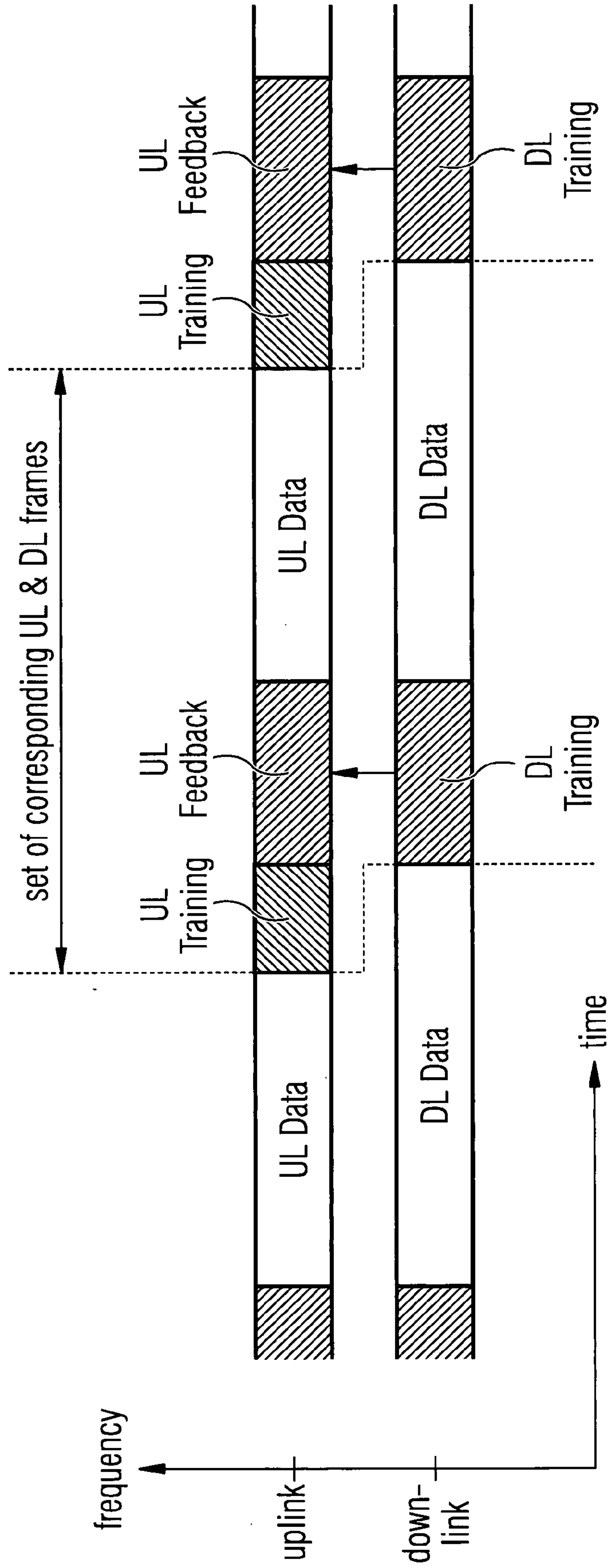
frequency
uplink
down-
link
time
UL Data
UL Training
UL Feedback
set of coresponding UL & DL frames
DL Data
DL Training

FIG. 7

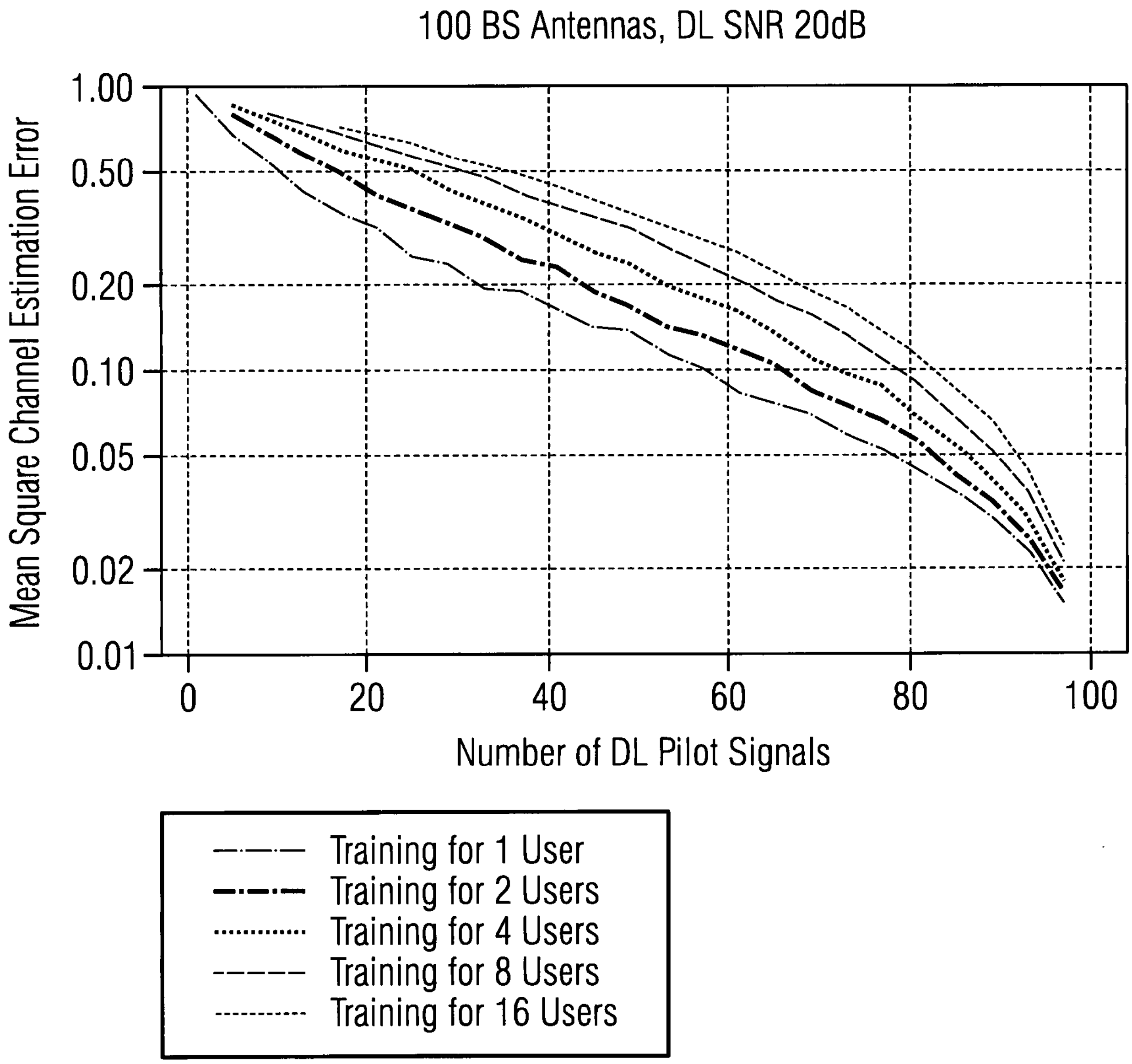
100 BS Antennas, DL SNR 20dB
Mean Square Channel Estimation Error
1.00
0.50
0.20
0.10
0.05
0.02
0.01
0
20
40
60
80
100
Number of DL Pilot Signals
Training for 1 User
Training for 2 Users
Training for 4 Users
Training for 8 Users
Training for 16 Users

FIG. 8 Part 1

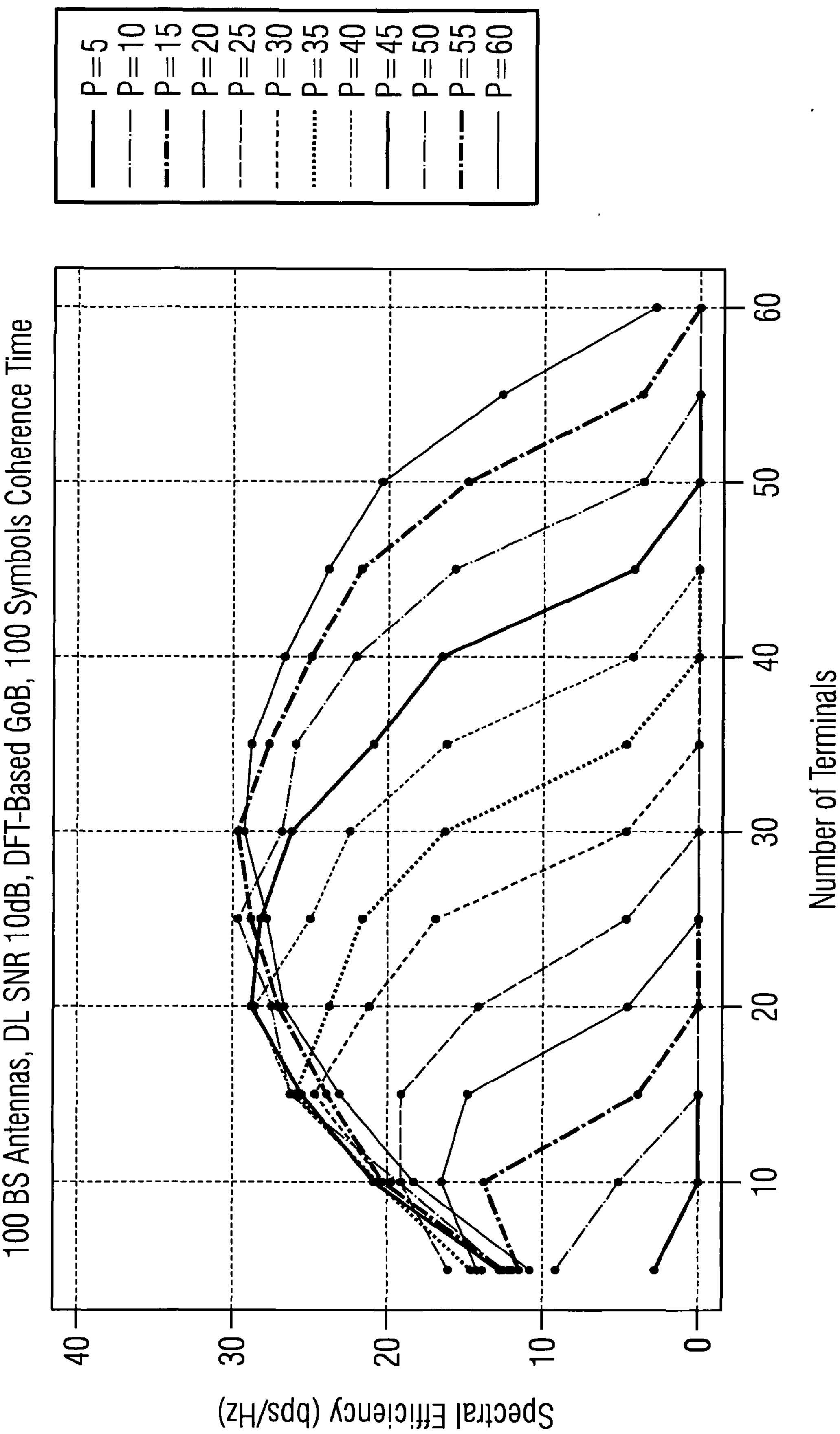
100 BS Antennas, DL SNR 10dB, DFT-Based GoB, 100 Symbols Coherence Time
Spectral Efficiency (bps/Hz)
0
10
20
30
40
Number of Terminals
10
20
30
40
50
60
P=5
P=10
P=15
P=20
P=25
P=30
P=35
P=40
P=45
P=50
P=55
P=60

FIG. 8 Part 2

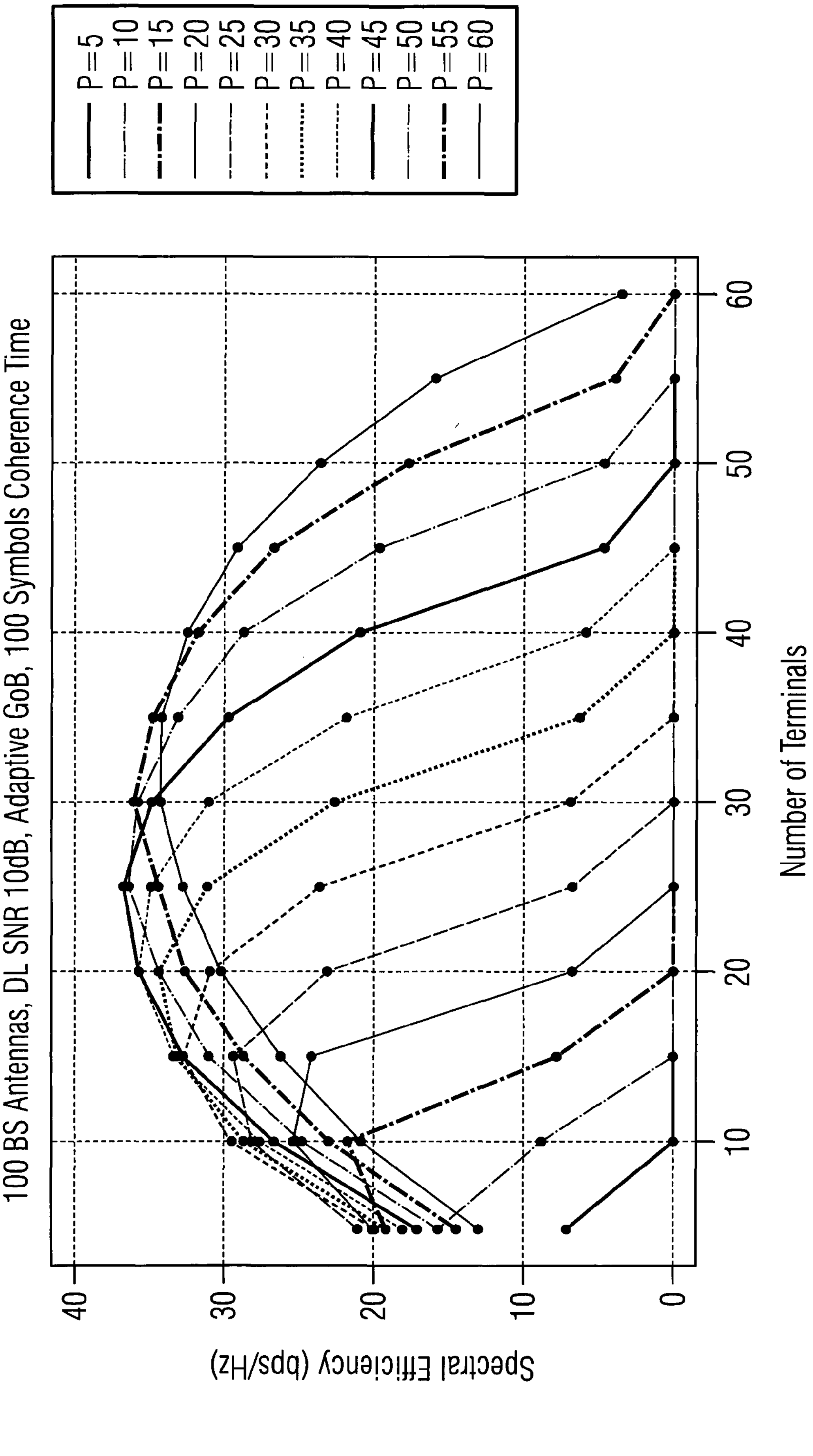
100 BS Antennas, DL SNR 10dB, Adaptive GoB, 100 Symbols Coherence Time
Spectral Efficiency (bps/Hz)
0
10
20
30
40
Number of Terminals
10
20
30
40
50
60
P=5
P=10
P=15
P=20
P=25
P=30
P=35
P=40
P=45
P=50
P=55
P=60

Europäisches Patentamt
European Patent Office
Office européen des brevets

# EUROPEAN SEARCH REPORT

Application Number
EP 16 30 6479

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | US 2016/020843 A1 (LI QINGHUA [US] ET AL) 21 January 2016 (2016-01-21)<br>* paragraphs [0012], [0014], [0029], [0036] - [0040], [0046] - paragraphs [0053], [0061], [0072], [0078]; claims 1-2; figures 1,2,3 *<br>----- | 1-4, 6-10, 15-18<br>5,12-14 | INV.<br>H04B7/0452<br>H04L25/02<br>H04B7/0417 |
| Y | US 2013/279425 A1 (BALRAJ RAJARAJAN [DE] ET AL) 24 October 2013 (2013-10-24)<br>* Equation 15;<br>paragraph [0035] - paragraph [0036] *<br>----- | 5 | |
| Y | US 2016/285534 A1 (LI LI ERRAN [US] ET AL) 29 September 2016 (2016-09-29)<br>* Equations 17, 18, 19;<br>paragraphs [0024], [0047], [0086], [0098] - paragraphs [0102], [0111]; figure 10 *<br>----- | 12-14 | |
| A | WO 2014/210477 A1 (INTEL CORP [US]) 31 December 2014 (2014-12-31)<br>* paragraph [0020] - paragraph [0033] *<br>----- | 1-18 | TECHNICAL FIELDS SEARCHED (IPC)<br>H04B<br>H04L |

The present search report has been drawn up for all claims

1

| Place of search | Date of completion of the search | Examiner |
|---|---|---|
| Munich | 10 March 2017 | Panahandeh, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 16 30 6479

This annex lists the patent family members relating to the patent documents cited in the above-mentioned European search report. The members are as contained in the European Patent Office EDP file on The European Patent Office is in no way liable for these particulars which are merely given for the purpose of information.

10-03-2017

| Patent document cited in search report | Publication date | Patent family member(s) | Publication date |
|---|---|---|---|
| US 2016020843 A1 | 21-01-2016 | CN 104995961 A | 21-10-2015 |
| | | CN 105009481 A | 28-10-2015 |
| | | CN 105027461 A | 04-11-2015 |
| | | CN 105027523 A | 04-11-2015 |
| | | CN 105027655 A | 04-11-2015 |
| | | CN 105075214 A | 18-11-2015 |
| | | CN 105075303 A | 18-11-2015 |
| | | CN 105075304 A | 18-11-2015 |
| | | CN 105075316 A | 18-11-2015 |
| | | CN 105075334 A | 18-11-2015 |
| | | CN 105075370 A | 18-11-2015 |
| | | CN 105075388 A | 18-11-2015 |
| | | CN 105103621 A | 25-11-2015 |
| | | EP 2979368 A1 | 03-02-2016 |
| | | EP 2979369 A1 | 03-02-2016 |
| | | EP 2979372 A1 | 03-02-2016 |
| | | EP 2979413 A1 | 03-02-2016 |
| | | EP 2979414 A1 | 03-02-2016 |
| | | EP 2979427 A1 | 03-02-2016 |
| | | EP 2979471 A1 | 03-02-2016 |
| | | EP 2979472 A1 | 03-02-2016 |
| | | EP 2979481 A1 | 03-02-2016 |
| | | EP 2979493 A1 | 03-02-2016 |
| | | EP 2979495 A1 | 03-02-2016 |
| | | EP 2979499 A1 | 03-02-2016 |
| | | EP 2995111 A1 | 16-03-2016 |
| | | HK 1216948 A1 | 09-12-2016 |
| | | HK 1217060 A1 | 16-12-2016 |
| | | HK 1217063 A1 | 16-12-2016 |
| | | HK 1217071 A1 | 16-12-2016 |
| | | HK 1217147 A1 | 23-12-2016 |
| | | HK 1217250 A1 | 30-12-2016 |
| | | HK 1217257 A1 | 30-12-2016 |
| | | HK 1217258 A1 | 30-12-2016 |
| | | HK 1217259 A1 | 30-12-2016 |
| | | HK 1217260 A1 | 30-12-2016 |
| | | HK 1217261 A1 | 30-12-2016 |
| | | HK 1217588 A1 | 13-01-2017 |
| | | JP 2016510583 A | 07-04-2016 |
| | | JP 2016514408 A | 19-05-2016 |
| | | JP 2016515774 A | 30-05-2016 |
| | | KR 20150112001 A | 06-10-2015 |
| | | KR 20150113096 A | 07-10-2015 |
| | | KR 20150113101 A | 07-10-2015 |
| | | KR 20150114980 A | 13-10-2015 |
| | | TW 201445917 A | 01-12-2014 |

EPO FORM P0459

For more details about this annex : see Official Journal of the European Patent Office, No. 12/82

page 1 of 4

## ANNEX TO THE EUROPEAN SEARCH REPORT ON EUROPEAN PATENT APPLICATION NO. EP 16 30 6479

This annex lists the patent family members relating to the patent documents cited in the above-mentioned European search report. The members are as contained in the European Patent Office EDP file on
The European Patent Office is in no way liable for these particulars which are merely given for the purpose of information.

10-03-2017

| Patent document cited in search report | Publication date | Patent family member(s) | Publication date |
|---|---|---|---|
| | | TW 201445991 A | 01-12-2014 |
| | | TW 201446025 A | 01-12-2014 |
| | | TW 201446039 A | 01-12-2014 |
| | | TW 201446068 A | 01-12-2014 |
| | | TW 201503721 A | 16-01-2015 |
| | | TW 201503726 A | 16-01-2015 |
| | | TW 201505471 A | 01-02-2015 |
| | | TW 201515452 A | 16-04-2015 |
| | | TW 201620328 A | 01-06-2016 |
| | | US 2014293842 A1 | 02-10-2014 |
| | | US 2014293890 A1 | 02-10-2014 |
| | | US 2014293988 A1 | 02-10-2014 |
| | | US 2014295849 A1 | 02-10-2014 |
| | | US 2014341048 A1 | 20-11-2014 |
| | | US 2015139292 A1 | 21-05-2015 |
| | | US 2015146532 A1 | 28-05-2015 |
| | | US 2015200718 A1 | 16-07-2015 |
| | | US 2015382365 A1 | 31-12-2015 |
| | | US 2016007346 A1 | 07-01-2016 |
| | | US 2016014184 A1 | 14-01-2016 |
| | | US 2016014632 A1 | 14-01-2016 |
| | | US 2016014836 A1 | 14-01-2016 |
| | | US 2016020843 A1 | 21-01-2016 |
| | | US 2016021606 A1 | 21-01-2016 |
| | | US 2016029249 A1 | 28-01-2016 |
| | | US 2016050246 A1 | 18-02-2016 |
| | | WO 2014158206 A1 | 02-10-2014 |
| | | WO 2014158208 A1 | 02-10-2014 |
| | | WO 2014158226 A1 | 02-10-2014 |
| | | WO 2014158235 A1 | 02-10-2014 |
| | | WO 2014158255 A1 | 02-10-2014 |
| | | WO 2014158258 A1 | 02-10-2014 |
| | | WO 2014158264 A1 | 02-10-2014 |
| | | WO 2014158273 A1 | 02-10-2014 |
| | | WO 2014158274 A1 | 02-10-2014 |
| | | WO 2014158275 A1 | 02-10-2014 |
| | | WO 2014158279 A1 | 02-10-2014 |
| | | WO 2014160553 A1 | 02-10-2014 |
| | | WO 2014160611 A1 | 02-10-2014 |
| | | WO 2014160733 A1 | 02-10-2014 |
| | | WO 2014160780 A1 | 02-10-2014 |
| | | WO 2014160885 A1 | 02-10-2014 |
| | | WO 2014160982 A1 | 02-10-2014 |
| | | WO 2014160984 A1 | 02-10-2014 |
| US 2013279425 A1 | 24-10-2013 | CN 103378894 A | 30-10-2013 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 16 30 6479

This annex lists the patent family members relating to the patent documents cited in the above-mentioned European search report. The members are as contained in the European Patent Office EDP file on
The European Patent Office is in no way liable for these particulars which are merely given for the purpose of information.

10-03-2017

| Patent document cited in search report | Publication date | Patent family member(s) | Publication date |
|---|---|---|---|
| | | DE 102013103934 A1 | 24-10-2013 |
| | | US 2013279425 A1 | 24-10-2013 |
| US 2016285534 A1 | 29-09-2016 | TW 201644225 A | 16-12-2016 |
| | | US 2016285534 A1 | 29-09-2016 |
| | | WO 2016156985 A1 | 06-10-2016 |
| WO 2014210477 A1 | 31-12-2014 | CN 105229934 A | 06-01-2016 |
| | | CN 105229942 A | 06-01-2016 |
| | | CN 105230053 A | 06-01-2016 |
| | | CN 105247804 A | 13-01-2016 |
| | | CN 105247924 A | 13-01-2016 |
| | | CN 105264788 A | 20-01-2016 |
| | | CN 105284059 A | 27-01-2016 |
| | | CN 105612769 A | 25-05-2016 |
| | | EP 3014781 A1 | 04-05-2016 |
| | | EP 3014787 A1 | 04-05-2016 |
| | | EP 3014788 A1 | 04-05-2016 |
| | | EP 3014790 A1 | 04-05-2016 |
| | | EP 3014791 A1 | 04-05-2016 |
| | | EP 3014908 A1 | 04-05-2016 |
| | | EP 3014909 A1 | 04-05-2016 |
| | | EP 3014923 A1 | 04-05-2016 |
| | | JP 2016525305 A | 22-08-2016 |
| | | JP 2016530749 A | 29-09-2016 |
| | | KR 20160003021 A | 08-01-2016 |
| | | KR 20160004355 A | 12-01-2016 |
| | | TW 201501515 A | 01-01-2015 |
| | | TW 201507391 A | 16-02-2015 |
| | | TW 201509162 A | 01-03-2015 |
| | | TW 201517660 A | 01-05-2015 |
| | | TW 201635825 A | 01-10-2016 |
| | | US 2015003301 A1 | 01-01-2015 |
| | | US 2015003325 A1 | 01-01-2015 |
| | | US 2015003326 A1 | 01-01-2015 |
| | | US 2015003338 A1 | 01-01-2015 |
| | | US 2015003543 A1 | 01-01-2015 |
| | | US 2015004995 A1 | 01-01-2015 |
| | | US 2016100401 A1 | 07-04-2016 |
| | | US 2016113036 A1 | 21-04-2016 |
| | | US 2016119967 A1 | 28-04-2016 |
| | | US 2016255628 A1 | 01-09-2016 |
| | | WO 2014209451 A1 | 31-12-2014 |
| | | WO 2014210185 A1 | 31-12-2014 |
| | | WO 2014210212 A1 | 31-12-2014 |
| | | WO 2014210441 A1 | 31-12-2014 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 16 30 6479

This annex lists the patent family members relating to the patent documents cited in the above-mentioned European search report. The members are as contained in the European Patent Office EDP file on
The European Patent Office is in no way liable for these particulars which are merely given for the purpose of information.

10-03-2017

| Patent document cited in search report | Publication date | Patent family member(s) | Publication date |
|---|---|---|---|
| | | WO 2014210471 A1 | 31-12-2014 |
| | | WO 2014210477 A1 | 31-12-2014 |
| | | WO 2014210493 A1 | 31-12-2014 |
| | | WO 2014210500 A1 | 31-12-2014 |

EPO FORM P0459

For more details about this annex : see Official Journal of the European Patent Office, No. 12/82